(19) **Europäisches Patentamt / European Patent Office / Office européen des brevets**

(11) **EP 4 657 956 A1**

(12) # EUROPEAN PATENT APPLICATION
published in accordance with Art. 153(4) EPC

(43) Date of publication:
**03.12.2025 Bulletin 2025/49**

(21) Application number: **24756117.8**

(22) Date of filing: **05.02.2024**

(51) International Patent Classification (IPC):
***H04W 72/23*** (2023.01)

(52) Cooperative Patent Classification (CPC):
**H04W 72/044; H04W 72/23**

(86) International application number:
**PCT/CN2024/076078**

(87) International publication number:
**WO 2024/169743 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.02.2023 CN 202310138206**

(71) Applicant: **Huawei Technologies Co., Ltd.**
**Shenzhen, Guangdong 518129 (CN)**

(72) Inventors:
- **LI, Ting**
  **Shenzhen, Guangdong 518129 (CN)**
- **WANG, Xiaohan**
  **Shenzhen, Guangdong 518129 (CN)**
- **CHEN, Xinyue**
  **Shenzhen, Guangdong 518129 (CN)**
- **JIN, Huangping**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57)    Embodiments of this application provide a communication method and apparatus, applicable to a CJT communication system, to resolve a parameter configuration problem of a CJT codebook. The method includes: A network device generates first indication information and second indication information, and sends the first indication information and the second indication information to a terminal device, where the first indication information indicates K first parameter combinations, the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of a first parameter included in a $k^{th}$ first parameter combination in the K first parameter combinations, k and K are positive integers, and $1 \leq k \leq K$.

FIG. 5

**Description**

This application claims priority to Chinese Patent Application No. 202310138206.X, filed on February 13, 2023 and entitled "COMMUNICATION METHOD AND APPARATUS", which is incorporated herein by reference in its entirety.

**TECHNICAL FIELD**

Embodiments of this application relate to the communication field, and in particular, to a communication method and apparatus.

**BACKGROUND**

In a frequency division duplexing (frequency division duplexing, FDD) system, a terminal device may perform channel estimation on a downlink channel based on a downlink reference signal sent by a network device, and feed back, to the network device in a form of a precoding matrix indicator (precoding matrix indicator, PMI) based on a standard/-protocol pre-designed codebook, an amplitude/phase weighting coefficient of an index/codeword closest to downlink channel information and the like, for the network device to perform downlink precoding based on the PMI. The terminal device needs to determine, based on codebook configuration parameters configured by the network device, a codebook used to determine the PMI. For example, for a Release 16 enhanced type II codebook (Rel-16 eType II codebook for short below), the network device selects a codebook configuration parameter combination from multiple preconfigured codebook configuration parameter combinations including different value combinations of $\{L, p_v, \beta\}$ and configures the codebook configuration parameter combination for the terminal device, where L is used to determine a quantity of spatial domain basis vectors shared in each polarization direction in a spatial domain matrix, $p_v$ is used to determine a quantity of frequency domain basis vectors in a frequency domain matrix, and β is used to control a proportion of non-zero coefficients reported in a coefficient matrix. In this way, the terminal device may determine a quantity of spatial domain basis vectors, a quantity of frequency domain basis vectors, and a largest quantity of reported non-zero coefficients in the codebook for the PMI based on the configured codebook configuration parameters. In addition, the network device further configures codebook subset restriction information for the terminal device to determine the PMI, to avoid interference to neighboring cells.

Currently, to improve system throughput performance and user experience, multiple transmitting and receiving points (transmitting and receiving point, TRP) are utilized to serve the terminal device through coherent joint transmission (coherent joint transmission, CJT). In this scenario, the terminal device needs to feed back joint downlink channel state information of the multiple TRPs participating in joint transmission, to enable coherent joint transmission. In view of this, the 3rd generation partnership project (3rd generation partnership project, 3GPP) Release 18 meeting focuses on discussions of CJT codebook enhancement that is based on the Rel-16 eType II codebook and a Release 17 further enhanced Type II port selection codebook (briefly referred to as Rel-17 FeType II codebook below). Similar to a single station-based transmission assumption, when channel state information (channel state information, CSI) measurement and reporting are performed based on a CJT codebook, the network device also needs to configure CJT codebook-related parameters and restriction information for the terminal device, to indicate the terminal device to determine and report the PMI based on the CJT codebook, so as to enable CJT. Therefore, how to configure the CJT codebook-related parameters and restriction information becomes an urgent problem to be resolved.

**SUMMARY**

Embodiments of this application provide a communication method and apparatus, to resolve a parameter configuration problem of a CJT codebook.

To achieve the foregoing objective, the following technical solutions are used in this application.

According to a first aspect, a communication method is provided. The method may be performed by a network device, may be performed by a component of the network device, for example, a processor, a chip, or a chip system of the network device, or may be implemented by a logical module or software that can implement all or some functions of the network device. The following uses an example in which the method is performed by the network device for description. The communication method includes: The network device generates first indication information and second indication information, and sends the first indication information and the second indication information to a terminal device, where the first indication information indicates K first parameter combinations, each of the K first parameter combinations includes a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter included in a $k^{th}$ first parameter combination in the K first parameter combinations, the target second parameter combination includes a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, where n, k, N, and K are positive integers, $1 \le n \le N$, and $1 \le k \le K$.

Based on the communication method, the network device separately configures the first parameter combination and the second parameter combination, generates the first indication information and the second indication information through association with the target value, and sends the first indication information and the second indication information to the terminal device, so that the terminal device may determine a PMI based on the configured K first parameter combinations and the target second parameter combination. This not only can reduce a quantity of preconfigured candidate parameter combinations, but also can reduce complexity of configuring parameters by the network device for the terminal device, thereby reducing indication overheads of the network device.

In a possible design solution, the $k^{th}$ value in the K values may be a sum of values of N first parameters included in the $k^{th}$ first parameter combination in the K first parameter combinations, or the $k^{th}$ value in the K values may be an average value of values of N first parameters included in the $k^{th}$ first parameter combination in the K first parameter combinations. Based on the design solution, the target value may be set based on the sum value or the average value of the N first parameters respectively corresponding to the selected K first parameter combinations, so that the K first parameter combinations may be associated with the target second parameter combination, to implement an appropriate parameter combination configuration.

In a possible design solution, the largest total quantity of non-zero coefficients that correspond to the N reference signal resources and that are allowed to be reported is determined based on the target value corresponding to the target second parameter combination. Based on the design solution, the target value corresponding to the target second parameter combination is used to control maximum feedback overheads of non-zero coefficient indication information reported by the terminal device, to avoid excessively high feedback overheads.

In a possible design solution, the target second parameter combination may be determined from the multiple candidate second parameter combinations based on the largest value in the K values, and the target value corresponding to the target second parameter combination is greater than or equal to the largest value in the K values. Based on the design solution, in a scenario in which the K first parameter combinations are first determined, the network device may determine the target second parameter combination based on the largest value in the K values corresponding to the selected K first parameter combinations, so that complexity of configuring parameters by the network device can be reduced.

In a possible design solution, the K first parameter combinations are determined from multiple candidate first parameter combinations based on a value of N, or the value of the first parameter corresponding to each reference signal resource in the K first parameter combinations is determined from a preconfigured candidate value set of the first parameter based on a value of N.

In a possible design solution, the K first parameter combinations are determined from multiple candidate first parameter combinations based on the target value corresponding to the target second parameter combination and a value of N, or the value of the first parameter corresponding to each reference signal resource in the K first parameter combinations is determined from a preconfigured candidate value set of the first parameter based on the target value corresponding to the target second parameter combination and a value of N. Based on this, the network device may determine the K first parameter combinations from the preconfigured candidate first parameter combinations based on the target value corresponding to the first determined target second parameter combination and the value of N or based on the preconfigured candidate value set of the first parameter.

In a possible design solution, when the K first parameter combinations are determined from the multiple candidate first parameter combinations based on the target value corresponding to the target second parameter combination and the value of N, each of the K values is equal to the target value corresponding to the target second parameter combination.

In a possible design solution, products of values of second parameters and values of third parameters included in all of multiple candidate second parameter combinations corresponding to a same target value are different. Based on the design solution, the products of the values of second parameters and the values of the third parameters included in the preconfigured candidate second parameter combinations corresponding to the same target value are different, so that parameter combination configurations with similar feedback overheads can be reduced.

In a possible design solution, when the value of the first parameter corresponding to the $n^{th}$ reference signal resource in the N reference signal resources is used to determine the quantity of spatial domain basis vectors corresponding to the $n^{th}$ reference signal resource, each of the multiple candidate second parameter combinations is a parameter combination formed by one parameter value in a candidate value set of the second parameter and one parameter value in a candidate value set of the third parameter other than a target parameter value combination in multiple parameter combinations, and the target parameter value combination includes a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter. Based on the design solution, a feedback overhead range corresponding to the multiple preconfigured candidate second parameter combinations may be controlled, to avoid excessively high feedback overheads, or avoid a sharp decrease in feedback precision caused by excessively low feedback overheads.

In a possible design solution, a sum of values of N first parameters in each of the K first parameter combinations is less than or equal to a first threshold, and the first threshold is determined based on the value of N. Based on the design solution, feedback overheads of a PMI feedback determined by the terminal device based on the first parameter can be controlled, and calculation complexity of the terminal device can be reduced.

In a possible design solution, a value of at most one first parameter in the values of the N first parameters in each of the K first parameter combinations is a largest value in the preconfigured candidate value set of the first parameter. Based on the design solution, feedback overheads of a PMI feedback determined by the terminal device based on the first parameter can also be controlled, and calculation complexity of the terminal device can be reduced.

In a possible design solution, when the target value corresponding to the candidate second parameter combination is greater than or equal to a second threshold, a product of the value of the second parameter and the value of the third parameter included in the candidate second parameter combination is less than or equal to a third threshold, and a product of the target value corresponding to the candidate second parameter combination and the value of the second parameter and the value of the third parameter included in the candidate second parameter combination is less than or equal to a product of the second threshold and the third threshold. Based on the design solution, a quantity of reported non-zero coefficients may be restricted to reduce feedback overheads, to avoid a case in which when the value of N is large, feedback overheads of the terminal device caused by some candidate second parameter combinations are far greater than maximum reporting overheads of a Rel-16 eType II codebook/Rel-17 FeType II codebook.

In a possible design solution, K is a positive integer greater than 1. The method provided in this embodiment of this application may further include: The network device receives third indication information from the terminal device. The third indication information indicates one first parameter combination selected by the terminal device from the K first parameter combinations.

According to a second aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The communication method includes: The terminal device receives first indication information and second indication information from a network device, where the first indication information indicates K first parameter combinations, each of the K first parameter combinations includes a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter included in a $k^{th}$ first parameter combination in the K first parameter combinations, the target second parameter combination includes a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, where n, k, N, and K are positive integers, $1 \leq n \leq N$, and $1 \leq k \leq K$. The terminal device determines, based on one first parameter combination selected from the K first parameter combinations and the target second parameter combination, channel state information corresponding to the N reference signal resources.

Based on the communication method, the terminal device may determine, based on the first indication information and the second indication information, the K first parameter combinations and the target second parameter combination that are associated with the target value, and determine a PMI based on the first parameter combination in the K first parameter combinations and the target second parameter combination, to feed back joint channel state information corresponding to the N reference signal resources.

In a possible design solution, the $k^{th}$ value in the K values may be a sum of values of N first parameters included in the $k^{th}$ first parameter combination in the K first parameter combinations, or the $k^{th}$ value in the K values may be an average value of values of N first parameters included in the $k^{th}$ first parameter combination in the K first parameter combinations. Based on the design solution, the target value may be set based on the sum value or the average value of the N first parameters respectively corresponding to the selected K first parameter combinations, so that the K first parameter combinations may be associated with the target second parameter combination, to implement an appropriate parameter combination configuration.

In a possible design solution, the largest total quantity of non-zero coefficients that correspond to the N reference signal resources and that are allowed to be reported is determined based on the target value corresponding to the target second parameter combination. Based on the design solution, the target value corresponding to the target second parameter combination is used to control maximum feedback overheads of non-zero coefficient indication information reported by the terminal device, to avoid excessively high feedback overheads.

In a possible design solution, the target second parameter combination is determined from the multiple candidate second parameter combinations based on the second indication information.

In a possible design solution, that the target second parameter combination is determined from the multiple candidate second parameter combinations based on the second indication information may include: The target second parameter combination may be determined from the multiple candidate second parameter combinations based on the second indication information and the largest value in the K values, and the target value corresponding to the target second parameter combination is greater than or equal to the largest value in the K values.

In a possible design solution, the K first parameter combinations may be determined from multiple candidate first parameter combinations based on the first indication information, or the value of the first parameter corresponding to each reference signal resource in the K first parameter combinations may be determined from a preconfigured candidate value set of the first parameter based on the first indication information.

In a possible design solution, that the K first parameter combinations are determined from the multiple candidate first parameter combinations based on the first indication information includes: The K first parameter combinations may be determined from the multiple candidate first parameter combinations based on the first indication information and one or both of the following: a value of N or the target value corresponding to the target second parameter combination.

In a possible design solution, when the K first parameter combinations may be determined from the multiple candidate first parameter combinations based on the first indication information, the value of N, and the target value corresponding to the target second parameter combination, each of the K values is equal to the target value corresponding to the target second parameter combination.

In a possible design solution, products of values of second parameters and values of third parameters included in all of multiple candidate second parameter combinations corresponding to a same target value are different.

In a possible design solution, when the value of the first parameter corresponding to the $n^{th}$ reference signal resource in the N reference signal resources is used to determine the quantity of spatial domain basis vectors corresponding to the $n^{th}$ reference signal resource, each of the multiple candidate second parameter combinations is a parameter combination formed by one parameter value in a candidate value set of the second parameter and one parameter value in a candidate value set of the third parameter other than a target parameter value combination in multiple parameter combinations, and the target parameter value combination includes a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter.

In a possible design solution, a sum of values of N first parameters in each of the K first parameter combinations is less than or equal to a first threshold, and the first threshold is determined based on the value of N.

In a possible design solution, a value of at most one first parameter in the values of the N first parameters in each of the K first parameter combinations is a largest value in the preconfigured candidate value set of the first parameter.

In a possible design solution, when the target value corresponding to the candidate second parameter combination is greater than or equal to a second threshold, a product of the value of the second parameter and the value of the third parameter included in the candidate second parameter combination is less than or equal to a third threshold, and a product of the target value corresponding to the candidate second parameter combination and the value of the second parameter and the value of the third parameter included in the candidate second parameter combination is less than or equal to a product of the second threshold and the third threshold.

In a possible design solution, K is a positive integer greater than 1. The method provided in this embodiment of this application may further include: The terminal device sends third indication information to the network device. The third indication information indicates one first parameter combination selected by the terminal device from the K first parameter combinations.

In addition, for technical effects of the method in the second aspect, refer to the technical effects of the method in the first aspect. Details are not described herein again.

According to a third aspect, a communication method is provided. The method may be performed by a network device, may be performed by a component of the network device, for example, a processor, a chip, or a chip system of the network device, or may be implemented by a logical module or software that can implement all or some functions of the network device. The following uses an example in which the method is performed by the network device for description. The communication method includes: The network device generates first information and second information, and sends the first information and the second information. The first information indicates K pieces of codebook subset restriction information, the second information indicates an association relationship between the K pieces of codebook subset restriction information and M reference signal resources in N reference signal resources configured by the network device, one reference signal resource is associated with at most one piece of codebook subset restriction information, one piece of codebook subset restriction information is associated with one or more reference signal resources, K≤M, M≤N, and K, M, and N are positive integers.

Based on the communication method, understandings of codebook subset restriction information configurations of the network device and the terminal device may be aligned, to implement codebook subset restrictions on all or a part of the N reference signal resources configured for CJT CSI measurement, and indicate the terminal device to determine joint channel state information corresponding to the N reference signal resources, to avoid interference to a user in another cell other than a coordinated TRP, and enable better coherent joint transmission of multiple TRPs.

In a possible design solution, the second information may include first indication information and second indication information. The first indication information indicates specific M reference signal resources, in the N reference signal resources configured by the network device, that have the association relationship with the K pieces of codebook subset limitation information, and the second indication information indicates the association relationship between the K pieces of codebook subset limitation information and the M reference signal resources. The association relationship may be preconfigured.

In a possible design solution, when K=M, the second information indicates the association relationship between the K pieces of codebook subset restriction information and the K reference signal resources in the N reference signal resources configured by the network device.

According to a fourth aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The communication method includes: The terminal device receives first information and second information from a network device, determines K pieces of codebook subset restriction information based on the first information, and determines, based on the second information, a corresponding association relationship between the K pieces of codebook subset restriction information and M reference signal resources in N reference signal resources configured by the network device. One reference signal resource is associated with at most one piece of codebook subset restriction information, one piece of codebook subset restriction information is associated with one or more reference signal resources, K≤M, M≤N, and K, M, and N are positive integers.

Based on the communication method, understandings of codebook subset restriction information configurations of the network device and the terminal device may be aligned, to implement codebook subset restrictions on all or a part of the N reference signal resources configured for CJT CSI measurement, and indicate the terminal device to determine joint channel state information corresponding to the N reference signal resources, to avoid interference to a user in another cell other than a coordinated TRP, and enable better coherent joint transmission of multiple TRPs.

In a possible design solution, the second information may include first indication information and second indication information. The first indication information indicates specific M reference signal resources, in the N reference signal resources configured by the network device, that have the association relationship with the K pieces of codebook subset limitation information, and the second indication information indicates the association relationship between the K pieces of codebook subset limitation information and the M reference signal resources. The association relationship may be preconfigured.

In a possible design solution, when K=M, the second information indicates the association relationship between the K pieces of codebook subset restriction information and the K reference signal resources in the N reference signal resources configured by the network device.

According to a fifth aspect, a communication apparatus is provided, configured to implement the foregoing methods. The communication apparatus may be the network device in the first aspect, an apparatus including the network device, or an apparatus included in the network device, for example, a chip. The communication apparatus includes a corresponding module, unit, or means (means) for implementing the method in the first aspect. The module, unit, or means may be implemented by hardware, software, or hardware executing corresponding software. The hardware or the software includes one or more modules or units corresponding to the foregoing function.

In some possible designs, the communication apparatus includes a processing module and a transceiver module. The processing module is configured to generate first indication information and second indication information, where the first indication information indicates K first parameter combinations, each of the K first parameter combinations includes a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter included in a $k^{th}$ first parameter combination in the K first parameter combinations, the target second parameter combination includes a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, where n, k, N, and K are positive integers, $1 \leq n \leq N$, and $1 \leq k \leq K$. The transceiver module is configured to send the first indication information and the second indication information to a terminal device.

In a possible design solution, the $k^{th}$ value in the K values may be a sum of values of N first parameters included in the $k^{th}$ first parameter combination in the K first parameter combinations, or the $k^{th}$ value in the K values may be an average value of values of N first parameters included in the $k^{th}$ first parameter combination in the K first parameter combinations.

In a possible design solution, the largest total quantity of non-zero coefficients that correspond to the N reference signal resources and that are allowed to be reported is determined based on the target value corresponding to the target second parameter combination.

In a possible design solution, the target second parameter combination may be determined from the multiple candidate second parameter combinations based on the largest value in the K values, and the target value corresponding to the target second parameter combination is greater than or equal to the largest value in the K values.

In a possible design solution, the K first parameter combinations are determined from multiple candidate first parameter combinations based on a value of N, or the value of the first parameter corresponding to each reference signal resource in the K first parameter combinations is determined from a preconfigured candidate value set of the first parameter based on a value of N.

In a possible design solution, the K first parameter combinations are determined from multiple candidate first parameter combinations based on the target value corresponding to the target second parameter combination and a value of N, or the value of the first parameter corresponding to each reference signal resource in the K first parameter combinations is determined from a preconfigured candidate value set of the first parameter based on the target value corresponding to the target second parameter combination and a value of N.

In a possible design solution, when the K first parameter combinations are determined from the multiple candidate first parameter combinations based on the target value corresponding to the target second parameter combination and the value of N, each of the K values is equal to the target value corresponding to the target second parameter combination.

In a possible design solution, products of values of second parameters and values of third parameters included in all of multiple candidate second parameter combinations corresponding to a same target value are different.

In a possible design solution, when the value of the first parameter corresponding to the $n^{th}$ reference signal resource in the N reference signal resources is used to determine the quantity of spatial domain basis vectors corresponding to the $n^{th}$ reference signal resource, each of the multiple candidate second parameter combinations is a parameter combination formed by one parameter value in a candidate value set of the second parameter and one parameter value in a candidate value set of the third parameter other than a target parameter value combination in multiple parameter combinations, and the target parameter value combination includes a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter.

In a possible design solution, a sum of values of N first parameters in each of the K first parameter combinations is less than or equal to a first threshold, and the first threshold is determined based on the value of N.

In a possible design solution, a value of at most one first parameter in the values of the N first parameters in each of the K first parameter combinations is a largest value in the preconfigured candidate value set of the first parameter.

In a possible design solution, when the target value corresponding to the candidate second parameter combination is greater than or equal to a second threshold, a product of the value of the second parameter and the value of the third parameter included in the candidate second parameter combination is less than or equal to a third threshold, and a product of the target value corresponding to the candidate second parameter combination and the value of the second parameter and the value of the third parameter included in the candidate second parameter combination is less than or equal to a product of the second threshold and the third threshold.

In a possible design solution, K is a positive integer greater than 1, and the transceiver module is further configured to receive third indication information from the terminal device. The third indication information indicates one first parameter combination selected by the terminal device from the K first parameter combinations.

In a possible design solution, the transceiver module may include a receiving module and a sending module. The sending module is configured to implement a sending function of the communication apparatus in the fifth aspect, and the receiving module is configured to implement a receiving function of the communication apparatus in the fifth aspect.

In a possible design solution, the communication apparatus in the fifth aspect may further include a storage module, and the storage module stores a program or instructions. When the processing module executes the program or the instructions, the communication apparatus in the fifth aspect may perform the method in the first aspect.

For technical effects of the communication apparatus in the fifth aspect, refer to the technical effects of the method in the first aspect. Details are not described herein again.

According to a sixth aspect, a communication apparatus is provided, configured to implement the foregoing methods. The communication apparatus may be the terminal device in the second aspect, an apparatus including the terminal device, or an apparatus included in the terminal device, for example, a chip. The communication apparatus includes a corresponding module, unit, or means (means) for implementing the method in the second aspect. The module, unit, or means may be implemented by hardware, software, or hardware executing corresponding software. The hardware or the software includes one or more modules or units corresponding to the foregoing function.

In some possible designs, the communication apparatus includes a processing module and a transceiver module. The transceiver module is configured to receive first indication information and second indication information from a network device, where the first indication information indicates K first parameter combinations, each of the K first parameter combinations includes a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter included in a $k^{th}$ first parameter combination in the K first parameter combinations, the target second parameter combination includes a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, where n, k, N, and K are positive integers, $1 \leq n \leq N$, and $1 \leq k \leq K$. The processing module is configured to determine, based on one first parameter combination selected from the K first parameter combinations and the target second parameter combination, channel state information corresponding to the N reference signal resources.

In a possible design solution, the $k^{th}$ value in the K values may be a sum of values of N first parameters included in the $k^{th}$ first parameter combination in the K first parameter combinations, or the $k^{th}$ value in the K values may be an average value of values of N first parameters included in the $k^{th}$ first parameter combination in the K first parameter combinations.

In a possible design solution, the largest total quantity of non-zero coefficients that correspond to the N reference signal resources and that are allowed to be reported is determined based on the target value corresponding to the target second parameter combination.

In a possible design solution, the target second parameter combination is determined from the multiple candidate second parameter combinations based on the second indication information.

In a possible design solution, that the target second parameter combination is determined from the multiple candidate second parameter combinations based on the second indication information may include: The target second parameter combination is determined from the multiple candidate second parameter combinations based on the second indication information and the largest value in the K values, and the target value corresponding to the target second parameter combination is greater than or equal to the largest value in the K values.

In a possible design solution, the K first parameter combinations may be determined from multiple candidate first parameter combinations based on the first indication information, or the value of the first parameter corresponding to each reference signal resource in the K first parameter combinations may be determined from a preconfigured candidate value set of the first parameter based on the first indication information.

In a possible design solution, that the K first parameter combinations may be determined from the multiple candidate first parameter combinations based on the first indication information based on a value of N includes: The K first parameter combinations may be determined from the multiple candidate first parameter combinations based on the first indication information and one or both of the following: a value of N or the target value corresponding to the target second parameter combination.

In a possible design solution, when the K first parameter combinations may be determined from the multiple candidate first parameter combinations based on the first indication information, the value of N, and the target value corresponding to the target second parameter combination, each of the K values is equal to the target value corresponding to the target second parameter combination.

In a possible design solution, products of values of second parameters and values of third parameters included in all of multiple candidate second parameter combinations corresponding to a same target value are different.

In a possible design solution, when the value of the first parameter corresponding to the $n^{th}$ reference signal resource in the N reference signal resources is used to determine the quantity of spatial domain basis vectors corresponding to the $n^{th}$ reference signal resource, each of the multiple candidate second parameter combinations is a parameter combination formed by one parameter value in a candidate value set of the second parameter and one parameter value in a candidate value set of the third parameter other than a target parameter value combination in multiple parameter combinations, and the target parameter value combination includes a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter.

In a possible design solution, a sum of values of N first parameters in each of the K first parameter combinations is less than or equal to a first threshold, and the first threshold is determined based on the value of N.

In a possible design solution, a value of at most one first parameter in the values of the N first parameters in each of the K first parameter combinations is a largest value in the preconfigured candidate value set of the first parameter.

In a possible design solution, when the target value corresponding to the candidate second parameter combination is greater than or equal to a second threshold, a product of the value of the second parameter and the value of the third parameter included in the candidate second parameter combination is less than or equal to a third threshold, and a product of the target value corresponding to the candidate second parameter combination and the value of the second parameter and the value of the third parameter included in the candidate second parameter combination is less than or equal to a product of the second threshold and the third threshold.

In a possible design solution, K is a positive integer greater than 1, and the transceiver module is further configured to send third indication information to the network device. The third indication information indicates one first parameter combination selected by the terminal device from the K first parameter combinations.

In a possible design solution, the transceiver module may include a receiving module and a sending module. The sending module is configured to implement a sending function of the communication apparatus in the sixth aspect, and the receiving module is configured to implement a receiving function of the communication apparatus in the sixth aspect.

In a possible design solution, the communication apparatus in the sixth aspect may further include a storage module, and the storage module stores a program or instructions. When the processing module executes the program or the instructions, the communication apparatus in the sixth aspect may perform the method in the second aspect.

For technical effects of the communication apparatus in the sixth aspect, refer to the technical effects of the method in the second aspect. Details are not described herein again.

According to a seventh aspect, a communication apparatus is provided, configured to implement the foregoing methods. The communication apparatus may be the network device in the third aspect, an apparatus including the network device, or an apparatus included in the network device, for example, a chip. The communication apparatus includes a corresponding module, unit, or means (means) for implementing the method in the third aspect. The module, unit, or means may be implemented by hardware, software, or hardware executing corresponding software. The hardware or the software includes one or more modules or units corresponding to the foregoing function.

In some possible designs, the communication apparatus includes a processing module and a transceiver module. The processing module is configured to generate first information and second information. The transceiver module is configured to send the first information and the second information. The first information indicates K pieces of codebook subset restriction information, the second information indicates an association relationship between the K pieces of codebook subset restriction information and M reference signal resources in N reference signal resources configured by the network device, one reference signal resource is associated with at most one piece of codebook subset restriction information, one piece of codebook subset restriction information is associated with one or more reference signal resources, K≤M, M≤N, and K, M, and N are positive integers.

In a possible design solution, the second information may include first indication information and second indication information. The first indication information indicates specific M reference signal resources, in the N reference signal resources configured by the network device, that have the association relationship with the K pieces of codebook subset limitation information, and the second indication information indicates the association relationship between the K pieces of codebook subset limitation information and the M reference signal resources. The association relationship may be preconfigured.

In a possible design solution, when K=M, the second information indicates the association relationship between the K pieces of codebook subset restriction information and the K reference signal resources in the N reference signal resources configured by the network device.

In a possible design solution, the transceiver module may include a receiving module and a sending module. The sending module is configured to implement a sending function of the communication apparatus in the seventh aspect, and the receiving module is configured to implement a receiving function of the communication apparatus in the seventh aspect.

In a possible design solution, the communication apparatus in the seventh aspect may further include a storage module, and the storage module stores a program or instructions. When the processing module executes the program or the instructions, the communication apparatus in the seventh aspect may perform the method in the third aspect.

For technical effects of the communication apparatus in the seventh aspect, refer to the technical effects of the method in the third aspect. Details are not described herein again.

According to an eighth aspect, a communication apparatus is provided, configured to implement the foregoing methods. The communication apparatus may be the terminal device in the fourth aspect, an apparatus including the terminal device, or an apparatus included in the terminal device, for example, a chip. The communication apparatus includes a corresponding module, unit, or means (means) for implementing the method in the fourth aspect. The module, unit, or means may be implemented by hardware, software, or hardware executing corresponding software. The hardware or the software includes one or more modules or units corresponding to the foregoing function.

In some possible designs, the communication apparatus includes a processing module and a transceiver module. The transceiver module is configured to receive first information and second information from a network device. The processing module is configured to determine K pieces of codebook subset restriction information based on the first information, and determine, based on the second information, a corresponding association relationship between the K pieces of codebook subset restriction information and M reference signal resources in N reference signal resources configured by the network device. One reference signal resource is associated with at most one piece of codebook subset restriction information, one piece of codebook subset restriction information is associated with one or more reference signal resources, K≤M, M≤N, and K, M, and N are positive integers.

In a possible design solution, the second information may include first indication information and second indication information. The first indication information indicates specific M reference signal resources, in the N reference signal resources configured by the network device, that have the association relationship with the K pieces of codebook subset limitation information, and the second indication information indicates the association relationship between the K pieces of codebook subset limitation information and the M reference signal resources. The association relationship may be preconfigured.

In a possible design solution, when K=M, the second information indicates the association relationship between the K pieces of codebook subset restriction information and the K reference signal resources in the N reference signal resources configured by the network device.

In a possible design solution, the communication apparatus in the eighth aspect may further include a storage module, and the storage module stores a program or instructions. When the processing module executes the program or the instructions, the communication apparatus in the eighth aspect may perform the method in the fourth aspect.

For technical effects of the communication apparatus in the eighth aspect, refer to the technical effects of the method in the fourth aspect. Details are not described herein again.

According to a ninth aspect, a communication apparatus is provided, including a processor and a communication interface. The communication interface is configured to communicate with a module other than the communication apparatus. The processor is configured to execute a computer program or instructions, to cause the communication apparatus to perform the method in any one of the first aspect to the fourth aspect.

According to a tenth aspect, a communication apparatus is provided, including at least one processor. The processor is configured to execute a computer program or instructions stored in a memory, to cause the communication apparatus to perform the method in any one of the first aspect to the fourth aspect. The memory may be coupled to the processor, or may be independent of the processor.

According to an eleventh aspect, a communication apparatus is provided (for example, the communication apparatus may be a chip or a chip system). The communication apparatus includes a processor, configured to implement functions in any one of the first aspect to the fourth aspect.

In some possible designs, the communication apparatus includes a memory, and the memory is configured to store necessary program instructions and/or data.

Optionally, the processor and the memory may be integrated together.

In some possible designs, when the apparatus is a chip system, the apparatus may include a chip, or may include a chip and another discrete component.

According to a twelfth aspect, a communication apparatus is provided, including a transceiver and a processor. The transceiver is configured to exchange information between the communication apparatus and another communication apparatus, and the processor executes program instructions to perform the method in any one of the first aspect to the fourth aspect.

In a possible design solution, the communication apparatus in the twelfth aspect may further include a memory. The memory may be integrated with the processor, or may be disposed separately from the processor. The memory may be configured to store a computer program and/or data in the method in any one of the first aspect to the fourth aspect.

According to a thirteenth aspect, a communication apparatus is provided. The communication apparatus is configured to perform the method in any one of the first aspect to the fourth aspect.

It should be understood that a corresponding module, unit, or means (means) for implementing the method in any one of the first aspect to the fourth aspect is included in the ninth aspect to the thirteenth aspect. The module, unit, or means may be implemented by hardware, software, or hardware executing corresponding software. The hardware or the software includes one or more modules or units configured to perform functions in the foregoing methods.

It may be understood that when the communication apparatus provided in any one of the ninth aspect to the thirteenth aspect is a chip, the foregoing sending action/function may be understood as output, and the foregoing receiving action/function may be understood as input.

According to a fourteenth aspect, a computer-readable storage medium is provided. The computer-readable storage medium stores a computer program or instructions. When the computer program or the instructions are run on a communication apparatus, the communication apparatus is caused to perform the method in any one of the first aspect to the fourth aspect.

According to a fifteenth aspect, a computer program product including instructions is provided. When the computer program product runs on a communication apparatus, the communication apparatus is caused to perform the method in any one of the first aspect to the fourth aspect.

According to a sixteenth aspect, a communication system is provided, and includes the network device in the first aspect and the terminal device in the second aspect, or includes the network device in the third aspect and the terminal device in the fourth aspect.

## BRIEF DESCRIPTION OF DRAWINGS

FIG. 1 is a diagram of a CJT transmission scenario according to an embodiment of this application;

FIG. 2 is a schematic flowchart in which a network device obtains CSI in an FDD system according to an embodiment of this application;

FIG. 3 is a diagram of an architecture of a communication system according to an embodiment of this application;

FIG. 4 is a diagram of structures of a network device 301 and a terminal device 302 according to an embodiment of this application;

FIG. 5 is a schematic flowchart of a communication method according to an embodiment of this application;

FIG. 6 is a schematic flowchart of another communication method according to an embodiment of this application;

FIG. 7 is a schematic flowchart of still another communication method according to an embodiment of this application;

FIG. 8 is a diagram of a structure of a communication apparatus according to an embodiment of this application; and

FIG. 9 is a diagram of a structure of another communication apparatus according to an embodiment of this application.

## DESCRIPTION OF EMBODIMENTS

To better understand embodiments of this application, the following several items are described before embodiments of this application.

First, in this application, "indicating" may include "directly indicating" and "indirectly indicating". When a piece of "indication information" is described as indicating A, the indication information may directly indicate A or indirectly indicate A, but it does not indicate that the indication information definitely carries A.

Information indicated by indication information is referred to as to-be-indicated information. During specific implementation, the to-be-indicated information is indicated in multiple manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of multiple pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when multiple pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into multiple pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, "first", "second", and various numeric numbers in the following embodiments are merely used for differentiation for ease of description, and are not intended to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

Third, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storing" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, a "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Fifth, in embodiments of this application, "information (information)", "signal (signal)", "message (message)", "channel (channel)", and "signaling (signaling)" may be interchangeably used sometimes. It should be noted that meanings expressed by the terms are consistent when differences between the terms are not emphasized. Terms "of (of)" and "corresponding (corresponding, relevant)" may sometimes be interchangeably used. It should be noted that meanings expressed by the terms are consistent when differences of the terms are not emphasized.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Seventh, in the descriptions of this application, "/" represents an "or" relationship between associated objects unless otherwise specified. For example, A/B may represent A or B. The term "and/or" in embodiments of this application describes only an association relationship between associated objects and indicates that three relationships may exist. For example, A and/or B may indicate the following three cases: Only A exists, both A and B exist, and only B exists, where A and B may be singular or plural. In addition, in the descriptions of embodiments of this application, unless otherwise specified, "multiple" means two or more. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a relative concept in a specific manner for ease of understanding.

Eighth, the technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5G mobile communication system, for example, a new radio (new radio, NR) system, and a future communication system, for example, a 6G mobile communication system.

Various aspects, embodiments, or features are presented in this application by describing a system that may include multiple devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

Finally, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding, the following first describes related technologies in embodiments of this application.

1. CJT

In CJT, multiple network devices transmit data to a terminal device through coherent transmission. The multiple network devices serving the terminal device know data information to be transmitted to the terminal device, and each network device needs to know joint channel state information (channel state information, CSI) between the network device and the terminal device and joint channel state information between another network device and the terminal device. The CSI may include one or more of the following: a PMI, a channel quality indicator (channel quality indicator, CQI), a channel state information reference signal (channel state information reference signal, CSI-RS) resource indicator (CSI-RS resource indicator, CRI), a layer indicator (layer indicator, LI), a rank indicator (rank indicator, RI), or the like.

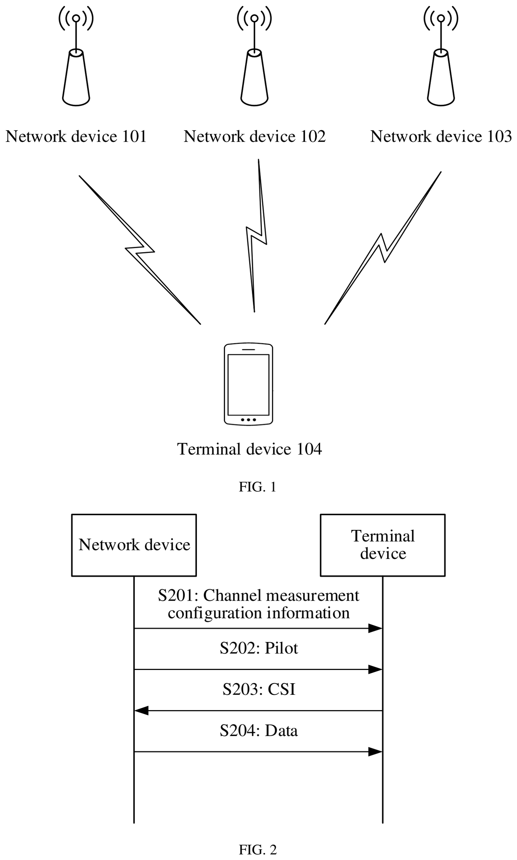

For example, FIG. 1 is a diagram of a CJT transmission scenario. As shown in FIG. 1, network devices 101 to 103 simultaneously serve a terminal device 104. The terminal device may measure and feed back joint CSI between the terminal device and multiple network devices, to enable coherent transmission, so that the network devices 101 to 103 can transmit data to the terminal device 104 through coherent transmission.

In a CJT scenario, the multiple network devices are like multiple distributed antenna arrays, and may jointly precode to-be-transmitted data at a same layer, which is equivalent to a large network device. "Coherent transmission" means that the multiple network devices may jointly transmit a data stream, so that signals sent by the multiple network devices can be superimposed in a same direction when the signals arrive at the terminal device, to cause a fold increase in a received signal power and greatly reduce interference. In other words, coherent transmission may convert interference between the multiple network devices into wanted signals, which can significantly improve data transmission performance, for example, can significantly improve a signal to interference plus noise ratio (signal to interference plus noise ratio, SINR).

To enable CJT transmission, the terminal device needs to report a correct CQI, and the network device determines a modulation and coding scheme (modulation and coding scheme, MCS) based on the CQI measured and reported by the terminal device, to perform good link adaptation.

2. Precoding technology

The precoding technology, also referred to as a beamforming (beamforming) technology, enables, when CSI is known, a sending device (for example, the network device) to process a to-be-sent signal by using a precoding matrix that matches the known CSI, to make a precoded to-be-sent signal adapt to a channel, so as to reduce complexity of eliminating impact between channels for a receiving device (for example, the terminal device). Performing precoding processing on the to-be-sent signal can improve quality (for example, a signal to interference plus noise ratio (signal to interference plus noise ratio, SINR)) of a received signal. Therefore, using the precoding technology can implement transmission of signals between the sending device and multiple receiving devices on a same time-frequency resource, in other words, implement multi-user multiple-input multiple-output (multi-user multiple-input multiple-output, MU-MIMO). It should be noted that the related descriptions of the precoding technology are merely an example for ease of understanding, and not intended to limit the protection scope of embodiments of this application. In a specific implementation process, the sending device may alternatively perform precoding in another manner. For example, when channel information (for example, but not limited to, a channel matrix) cannot be obtained, precoding is performed by using a preset precoding matrix or in a preset weighted processing manner. For brevity, specific content thereof is not described in this specification. Implementation of the precoding technology depends on CSI measurement and feedback.

In embodiments of this application, CSI measurement precision and timely feedback are key to effectively obtaining multiple-input multiple-output (multiple-input multiple-output, MIMO) transmission performance. Considering that CSI requires high measurement precision and low feedback overheads, CSI feedback in an NR system is mainly implicit feedback. In the implicit feedback, the terminal device feeds back a precoding matrix to the network device in a form of recommending a PMI, and the network device may directly perform precoding by using the precoding matrix recommended by the terminal device. For example, the terminal device determines, based on a codebook, a PMI that is fed back, where the PMI that is fed back indicates a precoding matrix recommended by the terminal device. Further, the network device may determine the corresponding codebook based on the PMI that is fed back, determine the corresponding precoding matrix based on the codebook, and preprocess downlink data based on the precoding matrix. In this way, low CSI feedback overheads can be maintained when high CSI measurement precision is obtained.

For example, FIG. 2 is a schematic flowchart in which a network device obtains CSI in an FDD system. As shown in FIG. 2, the CSI obtaining process includes the following steps.

S201: A network device sends channel measurement configuration information to a terminal device. Correspondingly, the terminal device receives the channel measurement configuration information from the network device.

The channel measurement configuration information is used to notify the terminal device of a resource used for channel measurement, channel measurement time and behavior, and related configuration information.

S202: The network device sends a pilot to the terminal device. Correspondingly, the terminal device receives the pilot from the network device.

The pilot may also be referred to as a pilot signal or a reference signal, for example, a CSI-RS. The terminal device may perform channel estimation by using the received pilot, to obtain CSI.

In a possible design solution, the terminal device may perform CSI calculation through singular value decomposition (singular value decomposition, SVD) or eigenvalue decomposition (eigenvalue decomposition, EVD) on a channel measured via the CSI-RS, or the terminal device may perform CSI calculation in another manner. This is not specifically limited in this embodiment of this application.

S203: The terminal device sends the CSI to the network device. Correspondingly, the network device receives the CSI from the terminal device.

For example, the terminal device may feed back the CSI to the network device through a physical uplink shared channel (physical uplink shared channel, PUSCH) or a physical uplink control channel (physical uplink control channel, PUCCH).

S204: The network device sends data to the terminal device based on the CSI.

For example, the network device may determine, based on the CSI that is fed back, a precoding matrix used for downlink precoding processing, preprocess to-be-sent downlink data based on the precoding matrix, to obtain precoded downlink data, and send the precoded downlink data to the terminal device.

In addition, in the FDD system, an uplink channel and a downlink channel are not completely reciprocal, but partial channel information of the uplink channel and partial channel information of the downlink channel have reciprocity. For example, angles and delays of the uplink and downlink channels have reciprocity. Therefore, the network device may obtain the CSI based on the angles and the delays of the uplink and downlink channels. For example, the network device may first perform channel estimation on the uplink channel to obtain uplink channel information, and obtain partial prior information of the downlink channel based on the uplink channel information, where the partial prior information includes angle and delay information of the downlink channel, to load the obtained angle and delay information of the downlink channel to a downlink pilot, for example, precode the CSI-RS based on the angle and delay information, and send a precoded downlink pilot to the terminal device. Further, the terminal device may measure the precoded downlink pilot, to obtain PMI information, and feed back the PMI information to the network device. Therefore, the network device may determine, based on the PMI information fed back by the terminal device and the angle and delay information, a precoding matrix used for service data delivery.

3. PMI reporting

APMI may be typically determined and reported based on a set of codebooks, to indicate a corresponding precoding matrix. Codebooks may be classified into different types, for example, a type I (type I) codebook, a type II (type II) codebook, or an enhanced type II (enhanced type II) codebook specified in the 3GPP technical specification (technical specification, TS) 38.214.

A three-stage codebook structure corresponding to a Rel-16 eType II codebook and a Rel-17 FeType II codebook is $W=W_1\widetilde{W}_2W_f^H$. W is a precoding matrix to be reported at each transport layer.

For the Rel-16 eType II codebook, $W_1$ is a spatial domain matrix that is formed by 2L spatial domain basis vectors and that is shared by all transport layers for spatial domain compression (each of two polarization directions corresponds to L same spatial domain basis vectors), and $W_1 \in \mathbb{C}^{P \times 2L}$, where P is a quantity of ports of a reference signal (for example, a CSI-RS), and is usually equal to a quantity of antenna ports of a transmitting end, and P and L are positive integers. $W_f$ is a frequency domain matrix that is formed by $M_v$ frequency domain basis vectors and that corresponds to each transport layer for frequency domain compression, and $W_f \in \mathbb{C}^{N_3 \times M_v}$, where $N_3$ is a quantity of PMI sub-bands or a quantity of frequency domain units, $M_v$ and $N_3$ are positive integers, and a value of $M_v$ is related to a quantity v of transport layers. $\widetilde{W}_2$ is a coefficient matrix formed by $2LM_v$ linear combination coefficients corresponding to the spatial domain basis vectors and the frequency domain basis vectors, and $\widetilde{W}_2 \in \mathbb{C}^{2L \times M_v}$.

A difference between the Rel-17 FeType II codebook and the Rel-16 eType II codebook is that the Rel-17 FeType II codebook uses partial reciprocity of uplink and downlink channels in an FDD system to select a codebook for a port. Based on this, $W_1$ is a port selection matrix, and indicates that $K_1$ ports are selected from P ports, $K_1=2L$, $K_1$ is a positive integer, L same ports are selected from P/2 ports in each polarization direction, and $W_1 \in \mathbb{N}^{P \times K_1}$. $W_f$ is a frequency domain matrix that is formed by M frequency domain basis vectors and that corresponds to each transport layer for frequency domain compression, $W_f \in \mathbb{C}^{N_3 \times M}$, and a value of M is unrelated to a quantity v of transport layers. Correspondingly, $\widetilde{W}_2$ is a coefficient matrix formed by 2LM linear combination coefficients corresponding to the ports and the frequency domain basis vectors, and $\widetilde{W}_2 \in \mathbb{C}^{K_1 \times M}$.

Regardless of whether the Rel-16 eType II codebook or the Rel-17 FeType II codebook is used, for $v2LM_v$ or v2LM linear combination coefficients corresponding to all v transport layers, the terminal device only needs to select several non-zero coefficients from the $v2LM_v$ or v2LM linear combination coefficients for reporting, for example, by using a bitmap (bitmap) for reporting.

In a possible design solution, CSI may be reported in two parts: a first part (a part 1 or a part I) and a second part (a part 2 or a part II). Overheads of the part 1 are fixed, and overheads of the part 2 may be determined based on a reporting amount in the part 1. For the Rel-16 eType II codebook, the part 1 may include an RI, a CQI, a total quantity of non-zero coefficients reported by all transport layers, and the like, and the part 2 may include spatial domain basis vector indication information, a spatial domain oversampling factor, frequency domain basis vector indication information, strongest coefficient indication information, a non-zero coefficient location indication bitmap, a quantized non-zero coefficient, and the like. For the Rel-17 FeType II codebook, the spatial domain basis vector indication information and the spatial domain oversampling factor in the part 2 are replaced with port selection indication information, and other reported information is the same as that in the Rel-16 eType II codebook.

4. Spatial domain basis vector

Each spatial domain basis vector corresponds to one transmit beam of a transmitting end device (corresponding to a TRP), and all elements in the spatial domain basis vector may indicate weights of all antenna ports. Based on the weights of all the antenna ports indicated by all the elements in the spatial domain basis vector, signals of all the antenna ports are linearly superimposed to form an area with stronger signals in a direction in space. Optionally, the spatial domain basis vector is obtained from a two-dimensional discrete Fourier transform (discrete Fourier transform, DFT) matrix, and the two-dimensional DFT matrix is a universal set of spatial domain basis vectors. Each column vector in the two-dimensional DFT matrix may be referred to as a two-dimensional DFT vector. In other words, the spatial domain basis vector may be a two-dimensional DFT vector, and the two-dimensional DFT vector may be usually used to describe a beam obtained by superimposing a beam in a horizontal direction and a beam in a vertical direction. A dimension of the spatial domain basis vector is $N1*N2 \times 1$, that is, the spatial domain basis vector includes N1*N2 elements, where N1 and N2 may be respectively quantities of horizontal transmit antenna ports and vertical transmit antenna ports of the transmitting end device in one polarization direction. In this case, the universal set of spatial domain basis vectors includes N1*N2 spatial domain basis vectors, and when the PMI is reported, L spatial domain basis vectors are selected from the N1*N2 spatial domain basis vectors to represent a spatial domain characteristic of a channel. N1 and N2 are positive integers.

5. Frequency domain basis vector

The frequency domain basis vector, also known as a frequency domain vector, is a vector that can be used to indicate a variation pattern of a frequency domain channel. Each frequency domain basis vector may represent a specific variation pattern. When signals are transmitted over a radio channel, they can travel from the transmit antenna to the receive antenna via multiple paths. The multipath delay leads to frequency-selective fading, which corresponds to the variations in the frequency domain channel. Therefore, the variation pattern, caused by delays on different transmission paths, of the frequency domain channel may be indicated by using different frequency domain basis vectors. Optionally, the frequency domain basis vector may be selected from a DFT matrix or an inverse discrete Fourier transform (inverse discrete Fourier transform, IDFT) matrix, where the DFT matrix or the IDFT matrix (that is, a conjugate transposition matrix of the DFT matrix) is a universal set of frequency domain basis vectors. In other words, the frequency domain basis vector may be a DFT vector or an IDFT vector.

A dimension of the frequency domain basis vector may be determined based on a quantity of to-be-reported frequency domain units that is preconfigured in a reporting bandwidth, or may be determined based on a length of the reporting bandwidth, or may be a value predefined in a protocol. A length of the frequency domain basis vector is not limited in this application. The reporting bandwidth may be a CSI reporting bandwidth (CSI-ReportingBand) carried in a CSI reporting configuration in higher layer signaling (for example, an RRC message). If the dimension of the frequency domain basis vector is $N3 \times 1$, the universal set of frequency domain basis vectors includes N3 frequency domain basis vectors, and when the PMI is reported, $M_v$ frequency domain basis vectors are selected from the N3 frequency domain basis vectors to represent a frequency domain characteristic of the channel. N3 is a positive integer.

6. Linear combination coefficient

The linear combination coefficient may also be referred to as a coefficient, a weighting coefficient, or the like. For single-station transmission, a PMI is used to report a precoding matrix of a single TRP. For multi-station coherent transmission, a PMI is used to report a joint precoding matrix of multiple TRPs, and a precoding matrix corresponding to each TRP or each reference signal resource is a sub-matrix of the joint precoding matrix of the multiple TRPs. When the PMI is reported, the codebook mentioned above is essentially that, for each transport layer, a precoding matrix or a precoding sub-matrix that corresponds to each TRP at the transport layer is represented by several spatial domain basis vectors and several frequency domain basis vectors in a form of linear weighting, and a weighting coefficient is a linear combination coefficient. For each transport layer and each reference signal resource, multiple linear combination coefficients are included, and each linear combination coefficient corresponds to one spatial domain basis vector and one frequency domain basis vector. For a port selection codebook (for example, the Rel-17 FeType II codebook or a multi-station codebook that is based on the Rel-17 FeType II codebook), for each transport layer and each reference signal resource, multiple linear combination coefficients are included, and each linear combination coefficient corresponds to one reference signal port and one frequency domain basis vector. When the PMI is reported, a part of coefficients are selected from all linear combination coefficients corresponding to all transport layers and all reference signal resources for reporting. An amplitude of the reported coefficient is usually not 0, and the coefficient may also be referred to as a non-zero coefficient.

7. Transport layer (layer)

The transport layer may also be referred to as a layer, a spatial layer, a data layer, a data stream, or the like. In a MIMO system, one transport layer may be considered as an independently transmitted data stream, and each transport layer may have a transport layer sequence number. To improve spectrum resource utilization and a data transmission capability of a communication system, a network device may transmit data to a terminal device through multiple transport layers.

A quantity of transport layers is a rank of a channel matrix. The terminal device may determine the quantity of transport layers based on the channel matrix obtained through channel estimation. It may be understood that the UE may determine a precoding matrix based on the channel matrix. For example, the UE may determine the precoding matrix by performing SVD on the channel matrix or a covariance matrix of the channel matrix. In an SVD process, different transport layers may be distinguished based on eigenvalues. For example, the UE may enable a precoding vector determined based on an eigenvector corresponding to a maximum eigenvalue to correspond to a 1st transport layer, and enable a precoding vector determined based on an eigenvector corresponding to a minimum eigenvalue to correspond to a vth transport layer. That is, the eigenvalues corresponding to the 1st transport layer to the vth transport layer decrease successively. In short, strengths decrease successively from the 1st transport layer to the last transport layer in the v transport layers.

8. Codebook subset restriction

In CSI measurement and reporting of a single-TRP assumption, for PMI information in a CSI report, to reduce interference to a neighboring cell, the network device may alternatively set, by using a higher layer parameter, a range of the PMI that the terminal is allowed to select for reporting, that is, restrict use of some PMIs in CSI reporting. This technology may be referred to as codebook subset restriction (codebook subset restriction, CBSR), and setting of the higher layer parameter may also be understood as a configuration of codebook subset restriction information. In other words, for some PMIs, when the network device sends data by using precoding determined based on these PMIs, strong interference is caused to the neighboring cell. Although the precoding is optimal for the terminal device, to avoid strong interference to the neighboring cell, the network device does not use the precoding to determine data transmission precoding. For CSI measurement based on a CJT codebook, interference to another cell other than a coordinated TRP can also be reduced by using the codebook subset restriction technology.

In existing related coefficients, when the Rel-16 eType II codebook/Rel-17 FeType II codebook is constructed, to restrict codebook feedback overheads when a codebook parameter is selected, a protocol predefines multiple candidate codebook configuration parameter combinations. The network device may configure a parameter combination index for the terminal device, so that the terminal device determines a related parameter corresponding to the codebook, to determine a corresponding PMI reporting amount.

The terminal device determines the Rel-16 eType II codebook based on a codebook configuration parameter combination selected from multiple preconfigured codebook configuration parameter combinations that is sent by the network device, where the multiple preconfigured codebook configuration parameter combinations are formed by $\{L, p_v,$ $\beta\}$. $p_v$ is used to determine a quantity $M_v$ of frequency domain basis vectors in $W_f$, where $M_v = \left\lceil p_v \frac{N_3}{R} \right\rceil$, $N_3$ is a quantity of PMI sub-bands or a quantity of frequency domain units, and R is a quantity of PMI sub-bands included in CQI sub-bands or a quantity of PMI frequency domain units included in CQI frequency domain units. $\beta$ is used to control a proportion of non-zero coefficients reported in $\tilde{W}_2$. A largest quantity of non-zero coefficients reported by the terminal device at each transport layer does not exceed $K_0 = \lceil \beta 2LM_1 \rceil$, a sum of non-zero coefficients reported at all transport layers cannot exceed $2K_0$, and $M_1$ indicates a corresponding quantity of frequency domain basis vectors when a quantity of transport layers is v = 1. Table 1 shows a preconfigured codebook configuration parameter combination table including different values of L, $p_v$, and $\beta$, where v is the quantity of transport layers, and is equal to a value of a rank (rank).

Table 1

| Codebook configuration parameter combination index | L | $p_\upsilon$ | | $\beta$ |
|---|---|---|---|---|
| | | $\upsilon \in \{1,2\}$ | $\upsilon \in \{3,4\}$ | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/2 | 1/4 | 1/2 |
| 7 | 6 | 1/4 | - | 1/2 |
| 8 | 6 | 1/4 | - | 3/4 |

The terminal device determines the Rel-17 FeType II codebook based on one codebook configuration parameter group that is selected from multiple preconfigured codebook configuration parameter combinations that are formed by $\{M,$ $\alpha, \beta \}$ and that is sent by the network device, where M is a quantity of frequency domain basis vectors in $W_f$, $\alpha$ indicates a proportion of a quantity of ports selected in $W_1$ in a quantity of ports of all reference signal resources and is used to determine a quantity $K_1$ of ports selected in $W_1$. In this case, a largest quantity of non-zero coefficients reported by the terminal device at each transport layer does not exceed $K_0 = \lceil \beta K_1 M \rceil$, and a sum of non-zero coefficients reported at all transport layers cannot exceed $2K_0$. Table 2 shows a preconfigured codebook configuration parameter combination table including different values of M, $\alpha$, and $\beta$.

Table 2

| Codebook configuration parameter combination index | M | α | β |
|---|---|---|---|
| 1 | 1 | 3/4 | 1/2 |
| 2 | 1 | 1 | 1/2 |
| 3 | 1 | 1 | 3/4 |
| 4 | 1 | 1 | 1 |
| 5 | 2 | 1/2 | 1/2 |
| 6 | 2 | 3/4 | 1/2 |
| 7 | 2 | 1 | 1/2 |
| 8 | 2 | 1 | 3/4 |

Currently, to improve system throughput performance and user experience, a same user may be served in a manner of multi-station joint transmission, for example, CJT and non-coherent transmission (non-coherent joint transmission, NCJT). In a CJT joint manner, multiple TRPs simultaneously serve the terminal device. For the terminal device, the multiple TRPs for joint transmission may be equivalent to one large network device.

To enable coherent joint transmission, the terminal device needs to feed back joint downlink channel state information between each TPR in joint transmission and the terminal device. In a possible implementation, multi-TRP enhancement may be performed on a codebook in the CJT joint manner based on the Rel-16 eType II codebook/Rel-17 FeType II codebook. For a codebook form in the CJT joint manner, refer to the following two CJT codebook forms:

$$\text{Form 1: } \begin{bmatrix} W_{1,1}\widetilde{W}_{2,1}W_{f,1}^H \\ \vdots \\ W_{1,N_1}\widetilde{W}_{2,N_1}W_{f,N_1}^H \end{bmatrix}$$

$$\text{Form 2: } \begin{bmatrix} W_{1,1}\widetilde{W}_{2,1}W_{f}^H \\ \vdots \\ W_{1,N_1}\widetilde{W}_{2,N_1}W_{f}^H \end{bmatrix}$$

$N_1$ is a quantity of TRPs that are selected by the terminal device from N TRPs configured by the network device and that are used for CJT transmission, and $N_1 \leq N$. For each transport layer, $W_{1,n}$ is a spatial domain matrix that is shared by all transport layers corresponding to an $n^{th}$ TRP in $N_1$ TRPs and that is formed by $2L_n$ spatial domain basis vectors, or a port selection matrix that indicates $2L_n$ selected ports. $W_{f,n}$ or $W_f$ is a frequency domain matrix that corresponds to the $n^{th}$ TRP in the $N_1$ TRPs corresponding to each transport layer and that is formed by $M_v$ or M frequency domain basis vectors. $\widetilde{W}_{2,n}$ is a coefficient matrix that corresponds to the $n^{th}$ TRP in the $N_1$ TRPs corresponding to each transport layer and that is formed by $2L_nM_v$ or $2L_nM$ linear combination coefficients. $N_1$ and N are positive integers, and $1 \leq N_1 \leq N$. For the CJT codebook in the form 2, all TRPs correspond to a same frequency domain matrix.

It should be noted that each TRP may correspond to one reference signal resource (for example, a CSI-RS resource), or each TRP may correspond to one port group on one reference signal resource (for example, a CSI-RS resource). In other words, in this application, there is a correspondence between a reference signal resource and a TRP, and one reference signal resource may indicate one TRP. For example, the reference signal resource is a time-frequency resource used to send a reference signal, and includes one or more reference signal ports. In this application, the port indicates a reference signal port.

For $N_1$ reference signal resources used for CJT transmission, it is discussed in the meeting that the terminal device is supported to select $N_1$ reference signal resources from N reference signal resources (resource) configured on a network side. The $N_1$ reference signal resources correspond to $N_1$ TRPs used for CJT transmission. The $N_1$ reference signal resources may be indicated by adding an N-bit bitmap to a CSI part 1. For example, $N \in \{1,2,3,4\}$. When $N=N_1$, this indicator may be default.

For the CJT codebook, the network device also needs to configure, for the terminal device, codebook configuration parameters used to determine a quantity of spatial domain basis vectors/a quantity of selected ports, a quantity of frequency domain basis vectors, and a largest quantity of reported non-zero coefficients corresponding to each TRP. However, how to configure the codebook configuration parameters of the CJT codebook becomes an urgent problem to be resolved.

For the CJT codebook based on the Rel-16 eType II codebook, a parameter setting of the Rel-16 eType II codebook is reused. $L_n$ indicates a quantity of spatial domain basis vectors shared by polarization corresponding to an $n^{th}$ reference signal resource, and a value of $L_n$ is an element in a candidate value set corresponding to the parameter. For example, a candidate value set of $L_n$ may be {2, 4, 6}. $p_v$ and $\beta$ are respectively used to control a value of a quantity of frequency domain basis vectors corresponding to each reference signal resource and a value of a largest quantity of non-zero coefficients that are allowed to be reported and that correspond to all reference signal resources. A value of each of $p_v$ and $\beta$ may be an element in a respective candidate value set. For example, the corresponding candidate value sets in the Rel-16 eType II codebook in Table 1 may be still used for $p_v$ and $\beta$. In addition, to reduce overheads of the CJT codebook, a new value may be further introduced. For example, the candidate value set of $\beta$ is { 1/8, 1/4, 1/2, 3/4}. When the quantity of transport layers is $u \in \{1,2\}$, the candidate value set of $p_v$ is {1/8, 1/4, 1/2}. When $\upsilon \in \{3,4\}$, the candidate valueset of $p_v$ is {1/16, 1/8, 1/4}. In this example, compared with the value of $\beta$ shown in Table 1, a value of $\beta$=1/8 is added. When $\upsilon \in \{1,2\}$, a value of $p_v$=1/8 is added. When $u \in \{3,4\}$, a value of $p_v$=1/16 is added.

For the CJT codebook based on the Rel-17 FeType II codebook, a parameter setting of the Rel-17 FeType II codebook is reused. $L_n$ indicates a quantity of selected ports in each polarization direction corresponding to an $n^{th}$ reference signal resource, a value of $L_n$ is controlled by $\alpha_n$, $\alpha_n$ indicates a proportion of the quantity of selected ports corresponding to the $n^{th}$ reference signal resource in a quantity of all ports on the reference signal resource, and a value of $\alpha_n$ may be an element in a candidate value set corresponding to the parameter. For example, a candidate valueset of $\alpha_n$ may be {1/2, 3/4, 1}. M is a quantity of frequency domain basis vectors corresponding to each reference signal resource, and $\beta$ is used to control a value of a largest quantity of non-zero coefficients that are allowed to be reported and that correspond to all reference signal resources. For example, the corresponding candidate value sets in the Rel-17 FeType II codebook in Table 2 may be still used for values of M and $\beta$, that is, the candidate value set of M is { 1, 2}, and the candidate value set of $\beta$ is {1/2, 3/4, 1}.

For the foregoing two CJT codebook forms, a quantity of spatial domain basis vectors shared by polarization corresponding to each TRP or a quantity of selected ports in each polarization direction is configured by the network device. For example, the network device may configure and deliver K (K is a positive integer) groups of $\{L_1, ..., L_N\}$ to the terminal device, so that the terminal device selects one group from the K groups of $\{L_1, ..., L_N\}$, to determine a value of $L_n$ corresponding to selected $N_1$ CSI-RS resources, where $L_n$ is a quantity of spatial domain basis vectors shared by polarization corresponding to an $n^{th}$ CSI-RS resource (or an $n^{th}$ TRP) or a quantity of selected ports in each polarization direction, $1 \leq n \leq N$, and n is a positive integer. Alternatively, for example, the network device may configure and deliver K (K is a positive integer) groups of $\{\alpha_1, ..., \alpha_N\}$ to the terminal device, so that the terminal device selects one group from the K groups of $\{\alpha_1, ..., \alpha_N\}$, to determine a value of $\alpha_n$ corresponding to selected $N_1$ CSI-RS resources, and $\alpha_n$ is used to determine a quantity of selected ports in each polarization direction corresponding to an $n^{th}$ CSI-RS resource (or an $n^{th}$ TRP).

It can be learned that a constraint on the total quantity of non-zero coefficients that are allowed to be reported for the CJT codebook is related to the parameters $p_v$ and $\beta$ and a total quantity of spatial domain basis vectors of the coordinated TRP, or is related to the parameters M and $\beta$ and a total quantity of selected ports of the coordinated TRP. However, a correspondence between the K groups of $\{L_1, ..., L_N\}$ and values of $p_v$ and $\beta$ or a correspondence between the K groups of $\{\alpha_1, ..., \alpha_N\}$ and values of M and $\beta$ is jointly preconfigured, for example, the correspondence is preconfigured by using a same codebook configuration parameter combination table. Consequently, a quantity of candidate codebook configuration parameter combinations greatly increases. In addition, when there are a large quantity of TRPs (for example, N = 3,4 ), some codebook configuration parameter combinations cause reporting overheads of the terminal device to be far greater than maximum reporting overheads of the Rel-16 eType II codebook/Rel-17 FeType II codebook (three to four times of the maximum reporting overheads).

Therefore, embodiments of this application provide a communication method, to resolve a codebook configuration parameter configuration problem of a CJT codebook.

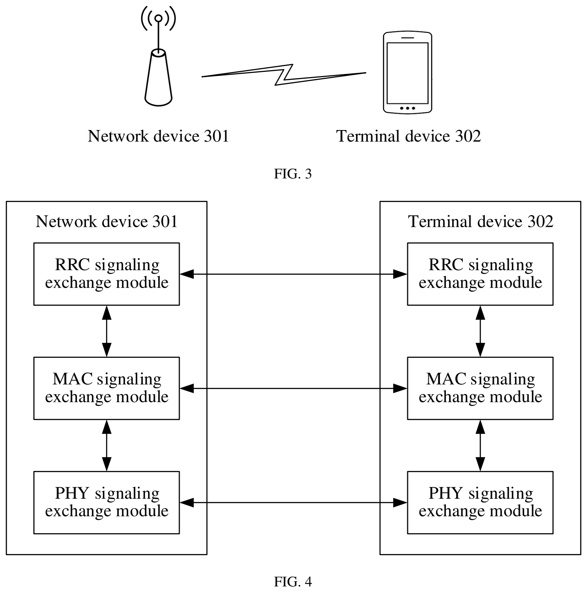

For example, FIG. 3 is a diagram of an architecture of a communication system according to an embodiment of this application. As shown in FIG. 3, the communication system includes a network device 301 and a terminal device 302. The network device 301 and the terminal device 302 may directly communicate with each other, or may communicate with each other through forwarding of another device. FIG. 3 shows an example of one network device and one terminal device. A quantity of network devices and a quantity of terminal devices are not limited in this embodiment of this application.

In embodiments of this application, multiple antennas may be configured for each communication device, for example, the network device 301 or the terminal device 302. The multiple antennas may include at least one transmit antenna configured to send a signal and at least one receive antenna configured to receive a signal. In addition, each communication device additionally includes a transmitter chain and a receiver chain. A person of ordinary skill in the art may understand that the transmitter chain and the receiver chain each may include multiple components related to signal sending and receiving (for example, a processor, a modulator, a multiplexer, a demodulator, a demultiplexer, or an antenna). Therefore, the network device 301 may communicate with the terminal device 302 by using a multi-antenna technology.

In embodiments of this application, the network device is a device that is located on a network side of the communication system and has a wireless transceiver function, or a chip or a chip system that may be disposed in the device. The network device includes but is not limited to: an access point (access point, AP), for example, a home gateway, a router, a server, a switch, or a bridge, in a Wi-Fi system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP or transmission point, TP), or the like. The network device may alternatively be a gNB or a transmission point (TRP or TP) in a 5G system, for example, a new radio (new radio, NR) system, or one antenna panel or a group of antenna panels (including multiple antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

In embodiments of this application, the terminal device is a terminal that accesses the communication system and has a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted device, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method provided in this application.

For example, FIG. 4 is a diagram of structures of a network device 301 and a terminal device 302 according to an embodiment of this application. As shown in FIG. 4, the network device 301 and the terminal device 302 each include an RRC signaling exchange module, a MAC signaling exchange module, and a PHY signaling exchange module. The RRC signaling exchange module, the MAC signaling exchange module, and the PHY signaling exchange module may communicate with each other. The RRC signaling exchange module is configured to send and receive RRC signaling. The MAC signaling exchange module is configured to send and receive MAC-CE signaling. The PHY signaling exchange module is configured to send and receive uplink/downlink control signaling and uplink/downlink data.

It should be noted that, the communication method provided in embodiments of this application is applicable to the terminal device and the network device shown in FIG. 3. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 3 is merely a simplified diagram of an example for ease of understanding. The communication system may further include another network device and/or another terminal device that are/is not shown in FIG. 3.

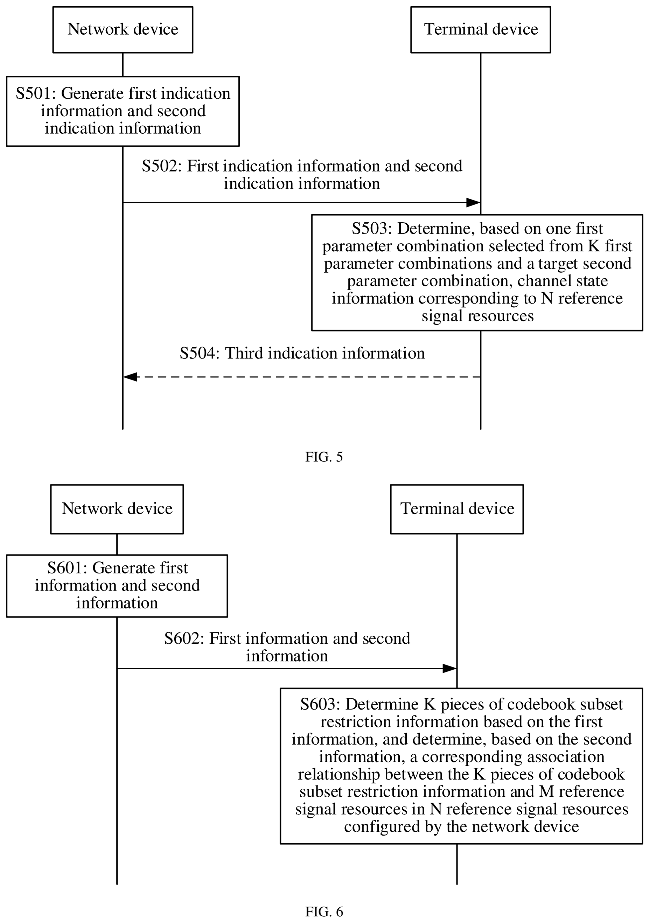

With reference to FIG. 5 to FIG. 7, the following describes in detail the communication method provided in embodiments of this application.

For example, FIG. 5 is a schematic flowchart of a communication method according to an embodiment of this application. The communication method is applicable to the communication system shown in FIG. 3.

As shown in FIG. 5, the communication method includes the following steps.

S501: A network device generates first indication information and second indication information.

S502: The network device sends the first indication information and the second indication information to a terminal device. Correspondingly, the terminal device receives the first indication information and the second indication information from the network device.

In this embodiment of this application, the first indication information and the second indication information may be sent together. For example, the first indication information and the second indication information are carried in a same message for transmission. Certainly, the first indication information and the second indication information may alternatively be sent separately. This is not specifically limited in this embodiment of this application.

S503: The terminal device determines, based on one first parameter combination selected from K first parameter combinations and a target second parameter combination, channel state information corresponding to N reference signal resources.

The following describes related content in step S501 and step S503 in detail.

For the foregoing step S501, the first indication information indicates the K first parameter combinations, and the second indication information indicates the target second parameter combination determined from multiple candidate second parameter combinations.

In this embodiment of this application, each of the K first parameter combinations includes a value of a first parameter corresponding to each of the N reference signal resources. In other words, each first parameter combination includes values of N first parameters corresponding to the N reference signal resources, and different value combinations of the N first parameters form different first parameter combinations. In addition, the values of the N first parameters in each first parameter combination may be the same, may be different, or may be partially the same. This is not specifically limited in this embodiment of this application.

One reference signal resource may correspond to one network device (for example, one TRP) that may provide a CJT service for the terminal device. For example, the reference signal resource may be a CSI-RS resource, the N reference signal resources respectively correspond to N TRPs, the N TRPs may provide a CJT transmission service for the terminal device, and a quantity N of CSI-RS resources may be preconfigured. For example, a value of N may be {1, 2, 3, 4}.

It should be understood that a reference signal may also be referred to as a pilot signal, a reference sequence, or the like. The foregoing listed reference signal is merely an example, and should not constitute any limitation on this application. This embodiment of this application does not exclude a possibility of defining another reference signal in a future protocol to implement a same or similar function.

In this embodiment of this application, a value of each first parameter in each first parameter combination is a value in a candidate value set of the first parameter. Optionally, the candidate value set of the first parameter may be preconfigured. In addition, each first parameter combination may be selected by the network device from a preconfigured candidate first parameter combination. A value of each first parameter in the candidate first parameter combination is a value in the candidate value set of the first parameter. In this case, it may be considered that values of all first parameters in the candidate first parameter combination form the candidate value set of the first parameter, and values of all elements in the set are unequal. Alternatively, each first parameter combination may be selected by the network device from the candidate value set of the first parameter. This is not specifically limited in this embodiment of this application.

In a possible design solution, a value of a first parameter corresponding to an $n^{th}$ reference signal resource in the N reference signal resources is used to determine a quantity of spatial domain basis vectors corresponding to the $n^{th}$ reference signal resource. In other words, the value of each first parameter in each first parameter combination is used by the terminal device to determine a quantity of spatial domain basis vectors required for constructing a spatial domain matrix corresponding to one reference signal resource.

For example, the first parameter corresponding to the $n^{th}$ reference signal resource may indicate a quantity of spatial domain basis vectors shared in each polarization direction corresponding to the $n^{th}$ reference signal resource. In this case, the first parameter corresponding to the $n^{th}$ reference signal resource may be $L_n$, $1 \leq n \leq N$, and a value of $L_n$ may be any value in {2, 4, 6}. The value of $L_n$ herein is merely an example, and should not constitute any limitation on this application. Correspondingly, the first parameter combination may be represented as {$L_1$, ..., $L_N$}.

In another possible design solution, a value of a first parameter corresponding to an $n^{th}$ reference signal resource in the N reference signal resources is used to determine a quantity of selected ports corresponding to the $n^{th}$ reference signal resource. In other words, the value of each first parameter in each first parameter combination is used by the terminal device to determine a quantity of selected ports corresponding to each reference signal resource.

For example, the first parameter corresponding to the $n^{th}$ reference signal resource may indicate a proportion of the quantity of selected ports corresponding to the $n^{th}$ reference signal resource in a quantity of port groups of the reference signal resource, that is, may be used to determine a quantity of selected ports in each polarization direction corresponding to the $n^{th}$ reference signal resource. In this case, the first parameter corresponding to the $n^{th}$ reference signal resource may be $\alpha_n$, and the candidate value set of the first parameter may be { 1/2, 3/4, 1}, and a value of $\alpha_n$ may be any value in { 1/2, 3/4, 1}. The value of $\alpha_n$ herein is merely an example, and should not constitute any limitation on this application. Correspondingly, the first parameter combination may be represented as {$\alpha_1$, ... , $\alpha_N$}.

In a possible implementation, a sum of the values of the N first parameters in each of the K first parameter combinations may be less than or equal to a first threshold, and the first threshold is determined based on a value of N. In other words, when the first parameter is used to determine the quantity of spatial domain basis vectors, the sum of the values of the N first parameters forming the first parameter combination cannot exceed the first threshold. The first threshold may restrict, based on a quantity of reference signal resources, overheads of feeding back, by the terminal device, a CJT codebook determined based on the first parameter. Therefore, reporting overheads of feeding back, by the terminal device, a PMI determined based on the first parameter and the CJT codebook, and calculation complexity of the terminal device can be reduced.

For example, the first parameter corresponding to the $n^{th}$ reference signal in the N reference signal resources is

$L_n$, a candidate value set of $L_n$ is {2, 4, 6}, and N=3. For any first parameter combination {$L_1, L_2, L_3$}, $L_1 + L_1 + L_3 \leq 4N=12$ is satisfied, that is, a total quantity of spatial domain basis vectors corresponding to the N reference signal resources is less than or equal to 12.

In a possible implementation, a value of at most one first parameter in the values of the N first parameters in each of the K first parameter combinations is a largest value in the predefined or preconfigured candidate value set of the first parameter. In other words, the value of the at most one first parameter in the values of the N first parameters in each first parameter combination is the largest value in the predefined or preconfigured candidate value set of the first parameter. Therefore, complexity of calculating the PMI by the terminal device can be reduced. For example, when N=3, and the predefined candidate value set of $L_n$ is {2, 4, 6}, for any combination {$L_1, L_2, L_3$}, a value of at most one $L_n$ is 6.

It should be noted that the foregoing two implementations of restricting the K first parameter combinations are both applicable to two design solutions in which the value of the first parameter corresponding to the $n^{th}$ reference signal resource in the N reference signal resources is used to determine the quantity of spatial domain basis vectors corresponding to the $n^{th}$ reference signal resource and used to determine the quantity of selected ports corresponding to the $n^{th}$ reference signal resource. The foregoing is separately described by using an example in which the first parameter is used for the quantity of spatial domain basis vectors.

In this embodiment of this application, the target second parameter combination is one of the multiple candidate second parameter combinations, and the multiple candidate second parameter combinations may be preconfigured. Any candidate second parameter combination includes a value of a second parameter and a value of a third parameter, that is, the target second parameter combination includes a value of a second parameter and a value of a third parameter. The value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported.

In addition, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of a first parameter included in a $k^{th}$ first parameter combination in the K first parameter combinations. A same target value may correspond to one or more candidate second parameter combinations.

In a possible design solution, the $k^{th}$ value in the K values may be a sum of values of N first parameters included in the $k^{th}$ first parameter combination in the K first parameter combinations.

For example, N=3, K=2, the first parameter is $L_n$, and two first parameter combinations {$L_1, L_2, L_3$} are {2, 2, 2} and {4, 2, 2} respectively. In this case, a sum of values of three first parameters in a $1^{st}$ first parameter combination is 6, and a sum of values of three first parameters in a $2^{nd}$ first parameter combination is 8, that is, K values are 6 and 8 respectively, and a largest value is 8. Based on this, the target value corresponding to the target second parameter combination is greater than or equal to 8. It should be understood that, in this scenario, the target value corresponding to the target second parameter combination should be an integer.

Alternatively, for example, the first parameter is $\alpha_n$, and two first parameter combinations {$\alpha_1, \alpha_2, \alpha_3$} are {1/2, 1/2, 1/2} and { 1/2, 3/4, 1/2} respectively. In this case, a sum of values of three first parameters in a $1^{st}$ first parameter combination is 3/2, and a sum of values of three first parameters in a $2^{nd}$ first parameter combination is 7/4, that is, the K values are 3/2 and 7/4 respectively, and a largest value is 7/4. Based on this, the target value corresponding to the target second parameter combination is greater than or equal to 7/4.

In another possible design solution, the $k^{th}$ value in the K values may alternatively be an average value of values of N first parameters included in the $k^{th}$ first parameter combination in the K first parameter combinations.

For example, N=3, K=2, the first parameter is $L_n$, and two first parameter combinations are {2, 2, 2} and {4, 2, 2} respectively. In this case, an average value of values of three first parameters in a $1^{st}$ first parameter combination is 2, and an average value of values of three first parameters in a $2^{nd}$ first parameter combination is 8/3, that is, the K values are 2 and 8/3 respectively, and a largest value is 8/3. Based on this, the target value corresponding to the target second parameter combination is greater than or equal to 8/3.

Alternatively, N=3, K=2, the first parameter is $\alpha_n$, and two first parameter combinations are { 1/2, 1/2, 1/2} and {1/2, 3/4, 1/2} respectively. In this case, an average value of values of three first parameters in a $1^{st}$ first parameter combination is 1/2, and an average value of values of three first parameters in a $2^{nd}$ first parameter combination is 7/12, that is, the K values are 1/2 and 7/12 respectively, and a largest value is 7/12. Based on this, the target value corresponding to the target second parameter combination is greater than or equal to 7/12.

It should be understood that the target value corresponding to the target second parameter combination may represent a largest value of a total quantity of spatial domain basis vectors corresponding to the N reference signal resources or a total quantity of selected ports.

When the value of the first parameter corresponding to the $n^{th}$ reference signal resource in the N reference signal resources is used to determine the quantity of spatial domain basis vectors corresponding to the $n^{th}$ reference signal resource, the second parameter may be $p_v$. For example, when $\upsilon \in \{1,2\}$, a candidate value set of $p_v$ may be {1/8, 1/4, 1/2};

or when $\upsilon \in \{3,4\}$, a candidate value set of $p_v$ may be {1/16, 1/8, 1/4}; and the third parameter may be $\beta$, for example, a candidate value set of $\beta$ is {1/8, 1/4, 1/2, 3/4}. In this case, the second parameter combination (the target second parameter combination or the candidate second parameter combination) may be represented as $\{p_v, \beta\}$. In this case, the non-zero coefficients that correspond to the N reference signal resources and that are allowed to be reported may be non-zero coefficients in linear combination coefficients corresponding to the spatial domain basis vectors and the frequency domain basis vectors.

When the value of the first parameter corresponding to the $n^{th}$ reference signal resource in the N reference signal resources is used to determine the quantity of selected ports corresponding to the $n^{th}$ reference signal resource, the second parameter may be M, for example, a candidate value set of M may be {1, 2}, and the third parameter may be $\beta$, for example, a candidate value set of $\beta$ is {1/2, 3/4, 1}. In this case, the second parameter combination (the target second parameter combination or the candidate second parameter combination) may be represented as $\{M, \beta\}$. In this case, the non-zero coefficients that correspond to the N reference signal resources and that are allowed to be reported may be non-zero coefficients in linear combination coefficients corresponding to the selected ports and the frequency domain basis vectors.

In a possible design solution, when a same target value corresponds to multiple candidate second parameter combinations, products of values of second parameters and values of third parameters included in all of the multiple candidate second parameter combinations corresponding to the same target value may be different. In other words, in the multiple candidate second parameter combinations corresponding to the same target value, products of values of second parameters and values of third parameters included in any two candidate second parameter combinations are different. Based on this, parameter combination configurations of similar feedback overheads can be reduced.

In a possible design solution, when the target value corresponding to the candidate second parameter combination is greater than or equal to a second threshold, a product of the value of the second parameter and the value of the third parameter included in the candidate second parameter combination is less than or equal to a third threshold, and a product of the target value corresponding to the candidate second parameter combination and the value of the second parameter and the value of the third parameter included in the candidate second parameter combination is less than or equal to a product of the second threshold and the third threshold. The second threshold and the third threshold may be preconfigured. Based on the design solution, a quantity of reported non-zero coefficients may be restricted to reduce feedback overheads, to avoid a case in which when the value of N is large, feedback overheads of the terminal device caused by some candidate second parameter combinations are far greater than maximum reporting overheads of a Rel-16 eType II codebook/Rel-17 FeType II codebook.

It should be noted that the foregoing two design solutions for restricting the values in the candidate second parameter combination are both applicable to two scenarios in which the value of the first parameter corresponding to the $n^{th}$ reference signal resource in the N reference signal resources is used to determine the quantity of spatial domain basis vectors corresponding to the $n^{th}$ reference signal resource and used to determine the quantity of selected ports corresponding to the $n^{th}$ reference signal resource. The following is separately described by using an example in which the first parameter is used for the quantity of spatial domain basis vectors.

For example, the target value is $L_d=8$, and there are three corresponding candidate second parameter combinations $\{p_v, \beta\}$. When a quantity of transport layers is u=2, the three candidate second parameter combinations are {1/8, 1/4}, { 1/4, 1/2}, and {1/2, 3/4} respectively, and products of values of second parameters and values of third parameters in the three candidate second parameter combinations are 1/32, 1/8, and 3/8 respectively, that is, products corresponding to any two candidate second parameter combinations are different, and products of $p_v$ and $\beta$ in multiple combinations $\{p_v, \beta\}$ corresponding to a same target value may be different.

For example, the target value is $L_d$, the second parameter is $p_v$, the third parameter is $\beta$, the second threshold is $L_{th}$, and the third threshold is $X_{th}$. When $L_d \geq L_{th}$, $p_v * \beta \leq X_{th}$, and $L_d * p_v * \beta \leq L_{th} * X_{th}$. The second threshold and the third threshold may be set based on restricted PMI reporting overheads, for example, the PMI reporting overheads are less than or equal to three times maximum reporting overheads of the Rel16/Rel17 codebook.

When the value of the first parameter corresponding to the $n^{th}$ reference signal resource in the N reference signal resources is used to determine the quantity of spatial domain basis vectors corresponding to the $n^{th}$ reference signal resource, in a possible design solution, each of the multiple candidate second parameter combinations may be a parameter combination formed by one parameter value in a candidate value set of the second parameter and one parameter value in a candidate value set of the third parameter other than a target parameter value combination in multiple parameter combinations. The target parameter value combination may include a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter.

In other words, the value of the second parameter and the value of the third parameter that are included in each of the multiple candidate second parameter combinations cannot be smallest values or largest values in the candidate value sets at the same time. For example, the second parameter is $p_v$, and the third parameter is $\beta$. When $\upsilon \in \{1,2\}$, the candidate value set of $p_v$ is $\{1/8, 1/4, 1/2\}$, and the candidate value set of $\beta$ is $\{1/8, 1/4, 1/2, 3/4\}$. In this case, values of $\{p_v, \beta\}$ in the multiple candidate second parameter combinations cannot include smallest values and/or largest values of $p_v$ and $\beta$ at the same time, that is, the target parameter value combination is $\{1/8, 1/8\}$, and/or $\{1/2, 3/4\}$. The candidate second parameter combination may not be a parameter combination whose values are $\{1/8, 1/8\}$ and/or $\{1/2, 3/4\}$.

Because the target values corresponding to the N reference signal resources when the value of N is larger (for example, N=3, 4) are usually greater than the target values corresponding to the N reference signal resources when the value of N is smaller (for example, N=1, 2), when a second parameter combination with a same value is used, more non-zero coefficients are correspondingly reported, and feedback overheads are increased.

The following describes in detail a process of determining the first indication information and the second indication information with reference to a scenario 1 and a scenario 2.

Scenario 1: The target value corresponding to the target second parameter combination is greater than or equal to the largest value in the K values, and the target second parameter combination is determined from the multiple candidate second parameter combinations based on the largest value in the K values.

In this scenario, in a possible design solution, the K first parameter combinations may be determined from multiple candidate first parameter combinations based on the value of N. The multiple candidate first parameter combinations may be preconfigured, and N with different values may have a correspondence with one or more candidate first parameter combinations. The correspondence may be indicated by using an index. The correspondence may be represented in a form of a table, or may be represented in another form that may indicate the correspondence. This is not limited in this embodiment of this application. Therefore, the network device may determine the K first parameter combinations from the multiple preconfigured candidate first parameter combinations based on the value of N and the correspondence between the value of N and the candidate first parameter combination, so that the network device may indicate indexes of the K first parameter combinations in the multiple candidate parameter combinations by using the first indication information, or indicate the selected K first parameter combinations by using other information that may be used to determine the K first parameter combinations from the multiple candidate parameter combinations.

For example, the first parameter is $L_n$, and the reference signal resource is a CSI-RS resource. Table 3 shows a possible correspondence between different quantities of CSI-RS resources and the candidate first parameter combination $\{L_1, ..., L_N\}$. The correspondence is indicated by an index. As shown in Table 3, N with different values may correspond to one or more candidate first parameter combinations. For example, when N=3, multiple candidate first parameter combinations in a form of $\{L_1, ..., L_N\}$ such as $\{2, 2, 2\}$, $\{4, 2, 2\}$, and $\{2, 4, 2\}$ are preconfigured. Therefore, the network device may select the K first parameter combinations from the multiple corresponding candidate first parameter combinations based on the preconfigured quantity of CSI-RS resources (that is, the value of N) and the correspondence shown in Table 3, so that the first indication information may indicate the K first parameter combinations by indicating the indexes (index) corresponding to the selected K first parameter combinations. For example, the network device selects two first parameter combinations from multiple candidate first parameter combinations corresponding to N being 3, that is, K=2, which are $\{2, 2, 2\}$ and $\{4, 2, 2\}$ respectively. When N=3, an index corresponding to $\{2, 2, 2\}$ is 1, and an index corresponding to $\{4, 2, 2\}$ is 2. In this case, the first indication information indicates that index values are 1 and 2.

Table 3

| N | Index | $L_1$ | $L_2$ | $L_3$ | ... | $L_N$ | $L_{tot}$ or $L_{ave}$ |
|---|---|---|---|---|---|---|---|
| ... | ... | ... | ... | ... | ... | | ... |
| 3 | 1 | 2 | 2 | 2 | -- | -- | 6 or 2 |
| | 2 | 4 | 2 | 2 | -- | -- | 8 or 8/3 |
| | 3 | 2 | 4 | 2 | -- | -- | 8 or 8/3 |
| | 4 | 6 | 2 | 2 | -- | -- | 10 or 10/3 |
| | ... | ... | ... | ... | ... | ... | ... |
| ... | ... | ... | ... | ... | ... | ... | ... |

For another example, the first parameter is $\alpha_n$ and the reference signal resource is a CSI-RS. Table 4 shows a correspondence between different quantities of CSI-RS resources and the candidate first parameter combination $\{\alpha_1, ... , \alpha_n\}$. The correspondence is indicated by an index. As shown in Table 4, $\alpha$ with different values also corresponds to one or more candidate first parameter combinations. For example, when N=3, multiple candidate first parameter combinations in a form of $\{\alpha_1, ... , \alpha_N\}$ such as $\{1/2, 1/2, 1/2\}$, $\{3/4, 1/2, 1/2\}$, $\{1/2, 3/4, 1/2\}$ are preconfigured. Therefore, the network device may select the K first parameter combinations from the multiple corresponding candidate first parameter combinations based on the preconfigured quantity of CSI-RS resources (that is, the value of N) and the correspondence shown in Table 4, so that the first indication information may indicate the K first parameter combinations by indicating the indexes (index) corresponding to the selected K first parameter combinations. For example, the network device selects two first parameter combinations from candidate first parameter combinations corresponding to N being 3, that is, K=2, which are {1/2, 1/2, 1/2} and {1/2, 3/4, 1/2} respectively. When N=3, an index corresponding to { 1/2, 1/2, 1/2} is 1, and an index corresponding to {1/2, 3/4, 1/2} is 3. In this case, index values indicated by the first indication information are 1 and 3.

Table 4

| N | Index | $\alpha_1$ | $\alpha_2$ | $\alpha_3$ | ... | $\alpha_N$ | $\alpha_{tot}$ or $\alpha_{ave}$ |
|---|---|---|---|---|---|---|---|
| ... | ... | ... | ... | ... | ... | ... | ... |
| 3 | 1 | 1/2 | 1/2 | 1/2 | -- | -- | 3/2 or 1/2 |
| | 2 | 3/4 | 1/2 | 1/2 | -- | -- | 7/4 or 7/12 |
| | 3 | 1/2 | 3/4 | 1/2 | -- | -- | 7/3 or 7/9 |
| | ... | ... | ... | ... | ... | ... | ... |
| ... | ... | ... | ... | ... | ... | ... | ... |

In the correspondences shown in Table 3 and Table 4, in multiple candidate first parameter combinations corresponding to a same value of N, two candidate first parameter combinations with a same value may exist, but the same value corresponds to different CSI-RS resources. As shown in Table 3, when N=3, values of three first parameters in the two candidate first parameter combinations {4, 2, 2} and {2, 4, 2} are the same, but the same value corresponds to different CSI-RS resources. In addition, Table 3 and Table 4 further show a sum (for example, $L_{tot}$ or $\alpha_{tot}$) or an average value ($L_{ave}$ or $\alpha_{ave}$) of values of N first parameters corresponding to the candidate first parameter combination corresponding to N with a different value. It should be understood that the sum (for example, $L_{tot}$ or $\alpha_{tot}$) or the average value ($L_{ave}$ or $\alpha_{ave}$) of the values of the N first parameters corresponding to the candidate first parameter combination corresponding to N with the different value may be determined based on values of first parameters in the candidate first parameter combinations. Therefore, the sum (for example, $L_{tot}$ or $\alpha_{tot}$) or the average value ($L_{ave}$ or $\alpha_{ave}$) of the values of the N first parameters corresponding to the candidate first parameter combination corresponding to N with the different value may not be reflected in the correspondence. This is not specifically limited in this embodiment of this application.

As shown in the correspondences shown in Table 3 and Table 4, index values corresponding to different candidate first parameter combinations may be separately numbered based on the value of N, that is, index values corresponding to multiple candidate first parameter combinations corresponding to N with a same value are all numbered starting from a start index value. In this case, the quantity N of reference signal resources and the index value corresponding to the correspondence between the value of N and the candidate first parameter combination are used to jointly determine a unique first parameter combination. In Table 3 and Table 4, an example in which the start index value is 1 and index values are numbered consecutively in order is used. Alternatively, another manner may be used. This is not limited in this embodiment of this application.

It should be noted that a form of a table representing the correspondence between the value of N and the candidate first parameter combination is not limited in this embodiment of this application. As shown in Table 5, in an example in which the first parameter is $L_n$, index values corresponding to the correspondence between all values of N and candidate first parameter combinations may be jointly numbered. The first parameter being $\alpha_n$ is similar to this, and details are not described again. In Table 5, an example in which the start index value is 1 and index values are numbered consecutively in order is used. Alternatively, another manner may be used. This is not limited in this embodiment of this application. In this case, the index value may be used to determine a unique first parameter combination. It should be understood that in the correspondence between the value of N and the candidate first parameter combination, the value of N may be determined based on a form of the candidate first parameter combination. Therefore, the value of N may not be directly reflected in the correspondence. This is not specifically limited in this embodiment.

Table 5

| Index | N | $L_1$ | $L_2$ | $L_3$ | ... | $L_N$ | $L_{tot}$ or $L_{ave}$ |
|---|---|---|---|---|---|---|---|
| 1 | | 2 | -- | -- | -- | -- | 2 or 2 |
| 2 | 1 | 4 | -- | -- | -- | -- | 4 or 4 |
| 3 | | 6 | -- | -- | -- | -- | 6 or 6 |

(continued)

| Index | N | $L_1$ | $L_2$ | $L_3$ | ... | $L_N$ | $L_{tot}$ or $L_{ave}$ |
|---|---|---|---|---|---|---|---|
| 4 | | 2 | 2 | -- | -- | -- | 4 or 2 |
| 5 | 2 | 4 | 2 | -- | -- | -- | 6 or 3 |
| 6 | | ... | ... | ... | ... | ... | ... |
| ... | ... | ... | ... | ... | ... | ... | ... |

It should be noted that, in this embodiment of this application, the network device may determine, based on one or more of factors such as a quantity of antenna ports, a channel condition, historical data, or a PMI feedback precision requirement, specific K first parameter combinations to be selected from one or more candidate parameter combinations corresponding to the quantity N of reference signal resources.

Based on this, the network device may determine the K values based on the selected K first parameter combinations, and determine the target second parameter combination from the multiple candidate second parameter combinations based on the largest value in the K values. In other words, the network device may determine the target value based on the largest value in the K values, and select one second parameter combination from the multiple candidate second parameter combinations corresponding to the target value as the target second parameter combination. In this case, the network device may indicate the selected second parameter combination by using the second indication information to indicate an index of the determined target second parameter combination.

It should be understood that the target value is determined based on the largest value in the K values, where the target value is one of target values (that is, preconfigured target values) corresponding to all candidate second parameter combinations. If the largest value in the K values is one of the target values corresponding to all the candidate second parameter combinations, the target value is equal to the largest value in the K values. If the largest value in the K values is not one of the target values corresponding to all the candidate second parameter combinations, the target value may be one, of the target values corresponding to all the candidate second parameter combinations, that is greater than or equal to the largest value in the K values and that is closest to the largest value in the K values, that is, the target value is greater than the largest value in the K values.

For example, the first parameter is $L_n$, the second parameter is $p_v$, the third parameter is $\beta$, and the $k^{th}$ value in the K values is the sum of the values of the N first parameters included in the $k^{th}$ first parameter combination in the K first parameter combinations. Table 6 shows a correspondence between different target values and candidate second parameter combinations, and the correspondence is indicated by an index value. As shown in Table 6, the target value is represented as $L_d$, and a same target value corresponds to one or more candidate second parameter combinations {$p_v$, $\beta$}. A correspondence between a same target value and multiple candidate second parameter combinations is numbered starting from a start index value, and in Table 6, numbering is performed from the start index value being 1. Therefore, the network device may determine the target value based on the selected K first parameter combinations {$L_1$, ... , $L_N$}, and determine, from the one or more candidate second parameter combinations corresponding to the target value, one second parameter combination as the target second parameter combination. For example, K=2, N=3, u=2, two first parameter combinations are {2, 2, 2} and {4, 2, 2} respectively, two values are 6 and 8 respectively, and the target value is 8. Therefore, the network device may select, as the target second parameter combination based on the correspondence between the target value and the candidate second parameter combination shown in Table 6, one second parameter combination from multiple candidate second parameter combinations corresponding to the target value being 8. For example, the target second parameter combination {$p_v$, $\beta$} may be { 1/8, 1/2}. In this case, an index value indicated by the second indication information is 1.

In this case, the target value is a largest value in K sum values corresponding to the determined K first parameter combinations, that is, $L_d = \max[L_{tot,1}, ..., L_{tot,K}]$.

Table 6

| $L_d$ | Index | $p_\upsilon$ | | $\beta$ |
|---|---|---|---|---|
| | | $\upsilon \in \{1, 2\}$ | $\upsilon \in \{3, 4\}$ | |
| ... | ... | ... | ... | ... |
| 8 | 1 | 1/8 | 1/16 | 1/2 |
| | 2 | 1/4 | 1/8 | 1/4 |
| | ... | ... | ... | ... |

(continued)

| $L_d$ | Index | $p_\upsilon$ | | $\beta$ |
|---|---|---|---|---|
| | | $\upsilon \in \{1, 2\}$ | $\upsilon \in \{3, 4\}$ | |
| ... | ... | ... | ... | ... |

For another example, the first parameter is $\alpha_n$, the second parameter is M, and the third parameter is $\beta$. Table 7 shows a correspondence between different target values and candidate second parameter combinations, and the correspondence is indicated by an index. As shown in Table 7, the target value is represented as $\alpha_d$, different target values correspond to different candidate second parameter combinations {M, $\beta$}, and a same target value corresponds to multiple candidate second parameter combinations {M, $\beta$}. A correspondence between the same target value and the multiple candidate second parameter combinations is numbered starting from a start index value, and in Table 7, numbering is performed from the start index value being 1. Therefore, the network device may determine the target value based on the selected K first parameter combinations {$\alpha_1$, ..., $\alpha_N$}, and select one second parameter combination from the multiple candidate second parameter combinations corresponding to the target value. For example, K=2, N=3, two first parameter combinations are {1/2, 1/2, 1/2} and {1/2, 3/4, 1/2}, and the target value is a largest value in sum values corresponding to the two first parameter combinations, that is, the target value is 7/4. In this case, the network device selects one second parameter combination from the corresponding candidate second parameter combinations based on the target value, for example, {1, 1/2}, and an index value indicated by the second indication information is 1. In this case, $L_d$ = max[$\alpha_{tot,1}$, ... $\alpha_{tot,K}$].

Table 7

| $\alpha_d$ | Index | M | $\beta$ |
|---|---|---|---|
| ... | ... | | ... |
| 7/4 or 7/12 | 1 | 1 | 1/2 |
| | 2 | 1 | 3/4 |
| | ... | | ... |
| ... | ... | | ... |

It should be understood that when $\alpha_d$ = max[$\alpha_{ave,1}$, ... $\alpha_{ave,K}$] or $L_d$ = max[$L_{ave,1}$, ... $L_{ave,K}$], a process in which the network device determines the target second parameter combination is similar to the determining processes based on Table 6 and Table 7. Details are not described herein again.

As shown in Table 8, in an example in which the target value is $L_d$, index values corresponding to the correspondence between all target values and candidate second parameter combinations may be jointly numbered. The target value being $\alpha_d$ is similar to this, and details are not described again. In Table 8, an example in which the start index value is 1 and index values are numbered consecutively in order is used. Alternatively, another manner may be used. This is not limited in this embodiment of this application. In this case, the index indicated by the second indication information may be used to uniquely determine one target second parameter combination.

Table 8

| Index | $L_d$ | $p_\upsilon$ | | $\beta$ |
|---|---|---|---|---|
| | | $\upsilon \in \{1,2\}$ | $\upsilon \in \{3,4\}$ | |
| 1 | 4 | 1/4 | 1/8 | 1/4 |
| 2 | 4 | 1/4 | 1/8 | 1/2 |
| 3 | 6 | 1/4 | 1/8 | 1/4 |
| 4 | 6 | 1/4 | 1/8 | 1/2 |
| 5 | 8 | 1/8 | 1/16 | 1/2 |
| 6 | 8 | 1/4 | 1/8 | 1/4 |
| ... | ... | ... | ... | ... |

In a possible implementation, the correspondence between the target value and the candidate second parameter combination may alternatively be a correspondence among the value of N, the target value, and the candidate second parameter combination. In other words, the correspondence between the target value and the candidate second parameter may be related to the value of N, and the correspondence among the value of N, the target value, and the candidate second parameter combination may also be indicated by an index. For example, Table 9 shows the correspondence among the value of N, the target value, and the candidate second parameter combination by using an example in which the target value is $L_d$. Different values of N may correspond to a same target value and candidate second parameter combination or different target values and candidate second parameter combinations. The target value being $\alpha_d$ is similar to this, and details are not described again. Indexes of all correspondences in Table 9 are jointly numbered in order. In this case, the second indication information may be used to uniquely determine one correspondence. Alternatively, correspondences between one or more target values and one or more candidate second parameter combinations corresponding to different values of N may be separately numbered. In this case, one correspondence may be uniquely determined based on the value of N and the second indication information. This is not limited in this application.

Table 9

| Index | N | $L_d$ | $p_\upsilon$ | | β |
|---|---|---|---|---|---|
| | | | $\upsilon \in \{1,2\}$ | $\upsilon \in \{3,4\}$ | |
| 1 | 1, 2 | 4 | 1/4 | 1/8 | 1/4 |
| 2 | 1, 2 | 4 | 1/4 | 1/8 | 1/2 |
| 3 | 1, 2, 3 | 6 | 1/4 | 1/8 | 1/4 |
| 4 | 1, 2 | 6 | 1/4 | 1/8 | 1/2 |
| 5 | 2, 3, 4 | 8 | 1/8 | 1/16 | 1/2 |
| 6 | 2, 3 | 8 | 1/4 | 1/8 | 1/4 |
| ... | | ... | ... | ... | ... |

In another possible design solution, the value of the first parameter corresponding to each reference signal resource in the K first parameter combinations may be determined from the preconfigured candidate value set of the first parameter based on the value of N. In other words, the value of the first parameter in any one of the K first parameter combinations may be selected by the network device from the preconfigured candidate value set of the first parameter based on the value of N.

For example, the first parameter is $L_n$, and the preconfigured candidate value set of $L_n$ is {2, 4, 6}. For each of the N reference signal resources, for example, the network device may select one value from {2, 4, 6} based on one or more of factors such as a quantity of antenna ports, a channel condition, historical data, or a PMI feedback precision requirement, to form one first parameter combination. Based on this, for each of the N reference signal resources, the network device performs selection K times from {2, 4, 6}, to form the K first parameter combinations.

It should be understood that when the first parameter is $\alpha_n$, a process in which the network device determines the K first parameter combinations based on the preconfigured candidate value set of $\alpha_n$ is similar to the process in which the network device determines the K first parameter combinations based on the preconfigured candidate value set of $L_n$. Details are not described herein again. In this scenario, the candidate value set of $\alpha_n$ predefined in a protocol may be { 1/2, 3/4, 1}.

When the K first parameter combinations are determined by the network device based on the preconfigured candidate value set of the first parameter, the first indication information may include indexes that indicate the values of the N first parameters included in each of the K first parameter combinations in the candidate value set of the first parameter. For example, N=3, K=2, the first parameter is $L_n$, the candidate value set is {2, 4, 6}, 2, 4, and 6 are indicated by indexes 1, 2, and 3 respectively, and two first parameter combinations are {2, 2, 2} and {4, 2, 2} respectively. In this case, an index combination indicating {2, 2, 2} is {1, 1, 1}, and an index combination indicating {4, 2, 2} is {2, 1, 1}, so that the first indication information may indicate an index set of values of three first parameters corresponding to each of the two first parameter combinations.

Further, the network device may determine the target value based on the K first parameter combinations, to select the target second parameter combination. For a specific implementation process, refer to the related descriptions in the foregoing design solution. Details are not described herein again.

Scenario 2: The target second parameter combination is selected by the network device from the multiple preconfigured candidate second parameter combinations. In this scenario, the network device may indicate the target second parameter combination by using the second indication information to indicate an index of the target second parameter combination.

For example, the first parameter is $L_n$, the second parameter is $p_v$, and the third parameter is $\beta$. Table 10 shows a correspondence between the target value and the candidate second parameter combination, and the correspondence is indicated by an index. As shown in Table 10, different target values correspond to one or more candidate second parameter combinations $\{p_v, \beta\}$. Therefore, the network device may select one candidate second parameter combination from the preconfigured candidate second parameter combinations shown in Table 10 as the target second parameter combination. For example, $u = 2$, the target second parameter combination is $\{1/8, 1/2\}$, and the target value corresponding to the target second parameter combination is 8. Therefore, an index value indicated by the second indication information is 5. In this scenario, the target value represents a largest value of the sum of the values of the N first parameters included in each of the selected K first parameter combinations, that is, $L_d \geq \sum_1^N L_n$ .

Table 10

| Index | $L_d$ | $p_v$ | | $\beta$ |
|---|---|---|---|---|
| | | $v \in \{1,2\}$ | $v \in \{3,4\}$ | |
| 1 | 4 | 1/4 | 1/8 | 1/4 |
| 2 | 4 | 1/4 | 1/8 | 1/2 |
| 3 | 6 | 1/4 | 1/8 | 1/4 |
| 4 | 6 | 1/4 | 1/8 | 1/2 |
| 5 | 8 | 1/8 | 1/16 | 1/2 |
| 6 | 8 | 1/4 | 1/8 | 1/4 |
| ... | ... | ... | ... | ... |

It should be understood that, when the value of the first parameter is used to determine the quantity of spatial domain basis vectors, the target value $L_d$ in Table 10 may also be replaced with a target value representing a largest value of an average value of the values of the N first parameters included in each of the selected K first parameter combinations, that is, $L_d \geq \frac{1}{N}\sum_1^N L_n$ .

For another example, the first parameter is $\alpha_n$, the second parameter is M, and the third parameter is $\beta$. Table 11 shows a correspondence between the target value and the candidate second parameter combination, and the correspondence is indicated by an index. As shown in Table 11, different target values correspond to one or more candidate second parameter combinations $\{M, \beta\}$. Therefore, the network device may select one candidate second parameter combination from the preconfigured candidate second parameter combinations shown in Table 11 as the target second parameter combination based on a requirement for the target value, the value of the second parameter, and the value of the third parameter. For example, the target second parameter combination is $\{1, 3/4\}$, and the target value corresponding to the target second parameter combination is 2. Therefore, an index value indicated by the second indication information is 5. In this scenario, the target value also represents a largest value of the sum of the values of the N first parameters included in each of the selected K first parameter combinations, that is, $\alpha_d \geq \sum_1^N \alpha_n$ .

Table 11

| Index | $\alpha_d$ | M | $\beta$ |
|---|---|---|---|
| 1 | 1.5 | 1 | 1/2 |
| 2 | 1.5 | 1 | 3/4 |
| 3 | 1.5 | 1 | 1 |
| 4 | 2 | 1 | 1/2 |
| 5 | 2 | 1 | 3/4 |
| 6 | 2 | 1 | 1/2 |
| ... | ... | ... | ... |

For another example, Table 12 shows a correspondence between the target value and the candidate second parameter combination when the target value represents a largest value of an average value of the values of the N first parameters included in each of the selected K first parameter combinations, that is, $\alpha_d \geq \frac{1}{N}\sum_1^N \alpha_n$, the correspondence between the target value and the candidate second parameter combination. The correspondence is indicated by an index. Similar to the scenario shown in Table 11, the network device may select one candidate second parameter combination from the multiple preconfigured candidate second parameter combinations shown in Table 12 as the target second parameter combination based on a requirement for the target value, the value of the second parameter, and the value of the third parameter. For example, the target second parameter combination is { 1, 1/2}, and the target value corresponding to the target second parameter combination is 0.75. Therefore, an index value indicated by the second indication information is 4.

Table 12

| Index | $\alpha_d$ | M | $\beta$ |
|-------|------|---|-----|
| 1 | 0.5 | 1 | 1/2 |
| 2 | 0.5 | 1 | 3/4 |
| 3 | 0.5 | 1 | 1 |
| 4 | 0.75 | 1 | 1/2 |
| 5 | 0.75 | 1 | 3/4 |
| 6 | 0.75 | 1 | 1/2 |
| ... | ... | ... | ... |

In a possible implementation, the correspondence between the target value and the candidate second parameter combination shown in Table 11 or Table 12 may alternatively be a correspondence among the value of N, the target value, and the candidate second parameter combination. In other words, the correspondence between the target value and the candidate second parameter is related to the value of N. The correspondence among the value of N, the target value, and the candidate second parameter combination may be indicated by an index. Different values of N may correspond to a same correspondence or different correspondences between target values and candidate second parameters. For a specific example and descriptions, refer to the related descriptions in Table 9 in the foregoing scenario 1. Details are not described herein again.

Further, the network device may determine the K first parameter combinations based on the target value corresponding to the determined target second parameter combination and the value of N.

In a possible design solution, the K first parameter combinations may be determined from the multiple candidate first parameter combinations based on the target value corresponding to the target second parameter combination and the value of N. In this scenario, each of the K values corresponding to the K first parameter combinations is equal to the target value corresponding to the target second parameter combination.

For example, the first parameter is $L_n$, the second parameter is $p_v$, and the third parameter is $\beta$. Table 13 shows a correspondence between different target values, values of N, and candidate second parameter combinations, and the correspondence is indicated by an index. As shown in Table 13, combinations of different target values $L_d$ and different quantities N of reference signal resources correspond to one or more candidate first parameter combinations $\{L_1, ..., L_N\}$. Therefore, the network device may select, based on the target value corresponding to the determined target second parameter combination and the preconfigured value of N, the K first parameter combinations from the multiple candidate first parameter combinations shown in Table 13. For example, N=3, K=2, the target second parameter combination is { 1/8, 1/2}, and the target value corresponding to the target second parameter combination is 8. In this case, the network device may select two first parameter combinations, for example, {4, 2, 2} and {2, 4, 2}, from the multiple corresponding candidate first parameter combinations $\{L_1, L_2, L_3\}$ based on the target value (that is, 8) corresponding to the target third parameter combination and the value of N (that is, N=3). Therefore, index values indicated by the first indication information are 1 and 2.

Table 13

| $(L_d, N)$ | Index | $L_1$ | $L_2$ | $L_3$ | ... | $L_N$ |
|------------|-------|-------|-------|-------|-----|-------|
| ... | ... | ... | ... | | -- | -- |

(continued)

| $(L_d, N)$ | Index | $L_1$ | $L_2$ | $L_3$ | ... | $L_N$ |
|---|---|---|---|---|---|---|
| | 1 | 4 | 2 | 2 | -- | -- |
| | 2 | 2 | 4 | 2 | -- | -- |
| (8, 3) | 3 | 2 | 2 | 4 | -- | -- |
| | ... | ... | ... | ... | -- | -- |
| ... | ... | ... | ... | ... | ... | ... |

For another example, the first parameter is $\alpha_n$, the second parameter is M, and the third parameter is $\beta$. Table 14 shows another correspondence between different target values, values of N, and candidate first parameter combinations, and the correspondence is indicated by an index. As shown in Table 14, combinations of different target values $\alpha_d$ and different quantities N of reference signal resources correspond to multiple candidate first parameter combinations $\{\alpha_1, ... , \alpha_N\}$. Therefore, the network device may determine the K first parameter combinations based on the target value corresponding to the determined target second parameter combination and the preconfigured value of N. For example, N=3, K=2, the target second parameter combination is {1, 3/4}, and the target value corresponding to the target second parameter combination is 2. In this case, the network device may select two first parameter combinations, for example, {0.75, 0.75, 0.5} and { 1, 0.5, 0.5}, from the multiple corresponding candidate first parameter combinations $\{\alpha_1, \alpha_2, \alpha_3\}$ based on the target value (that is, 2) corresponding to the target second parameter combination and the value of N (that is, N=3). Therefore, index values indicated by the first indication information are 1 and 2.

Table 14

| $(\alpha_d, N)$ | Index | $\alpha_1$ | $\alpha_2$ | $\alpha_3$ | ... | $\alpha_N$ |
|---|---|---|---|---|---|---|
| ... | ... | ... | ... | | -- | -- |
| | 1 | 0.75 | 0.75 | 0.5 | -- | -- |
| (2, 3) | 2 | 1 | 0.5 | 0.5 | -- | -- |
| | 3 | 0.75 | 0.5 | 0.75 | -- | -- |
| | ... | ... | ... | ... | -- | -- |
| ... | ... | ... | ... | ... | ... | |

It should be understood that, in the correspondences shown in Table 13 and Table 14, the target value ($L_d$ or $\alpha_d$) represents the sum of the values of the N first parameters included in each of the selected K first parameter combinations. In addition, the correspondences shown in Table 13 and Table 14 may also be replaced with a correspondence among the target value representing the average value of the values of the N first parameters included in each of the K first parameter combinations, the value of N, and the candidate first parameter combination.

For example, the first parameter is $\alpha_n$, the second parameter is M, and the third parameter is $\beta$. Table 15 shows a correspondence among different target values, values of N, and candidate first parameter combinations when the target value represents the average value of the values of the N first parameters included in each of the K first parameter combinations. The correspondence is indicated by an index. As shown in Table 15, different target values $\alpha_d$ and different values of N correspond to multiple candidate first parameter combinations $\{\alpha_1, ..., \alpha_N\}$. Therefore, the network device may determine the K first parameter combinations based on the target value corresponding to the determined target second parameter combination and the preconfigured value of N. For example, N=3, K=2, the target third parameter combination is {2, 3/4}, and the target value corresponding to the target third parameter combination is 0.75. In this case, the network device may select, based on the target value (that is, 0.75) corresponding to the target second parameter combination and the value of N (that is, N=3), two first parameter combinations from the multiple candidate first parameter combinations $\{\alpha_1, \alpha_2, \alpha_3\}$ shown in Table 15, for example, {0.75, 0.75, 0.5} and { 1, 0.75, 0.5}. Therefore, index values indicated by the first indication information are 1 and 2.

Table 15

| $(\alpha_d, N)$ | Index | $\alpha_1$ | $\alpha_2$ | $\alpha_3$ | ... | $\alpha_N$ |
|---|---|---|---|---|---|---|
| ... | ... | ... | ... | -- | -- | -- |

(continued)

| $(\alpha_d, N)$ | Index | $\alpha_1$ | $\alpha_2$ | $\alpha_3$ | ... | $\alpha_N$ |
|---|---|---|---|---|---|---|
| (0.75, 3) | 1 | 0.75 | 0.75 | 0.75 | -- | -- |
| | 2 | 1 | 0.75 | 0.5 | -- | -- |
| | 3 | 0.75 | 1 | 0.75 | -- | -- |
| | ... | ... | ... | ... | -- | -- |
| ... | ... | ... | ... | ... | ... | ... |

It should be understood that, when there is a correspondence among the target value corresponding to the target second parameter, the value of N, and one or more candidate first parameter combinations, if K is equal to a total quantity (X) of candidate first parameter combinations corresponding to the value of N and the target value corresponding to the target second parameter combination, that is, K=X, the first indication information may not include an index indication, that is, the index value is empty, or the network device does not send the first indication information, and the terminal device may determine the X preconfigured candidate first parameter combinations based on the target value and the value of N determined based on the second indication information. The X candidate first parameter combinations are the K first parameter combinations. In other words, the terminal device may select one first parameter combination from the X candidate first parameter combinations by default for use.

It should be noted that, in this embodiment of this application, table forms shown in Table 13 to Table 15 are not limited. For example, in Table 13 to Table 15, candidate first parameter combinations corresponding to the same target value and the same value of N are numbered starting from a start index value, for example, numbering is performed from the start index value being 1. In addition, index values of candidate first parameter combinations corresponding to different target values and values of N may also be consecutively numbered. For example, in Table 16, the first parameter is $L_n$, the second parameter is $p_v$, the third parameter is $\beta$, and the target value represents the sum of the values of the N first parameters included in each of the K first parameter combinations, which shows a correspondence among different target values, values of N, and candidate first parameter combinations. The correspondence is indicated by an index.

Table 16

| Index | N | $L_1$ | $L_2$ | $L_3$ | ... | $L_n$ | $L_d$ |
|---|---|---|---|---|---|---|---|
| 1 | 1 | 2 | -- | -- | -- | -- | 2 |
| 2 | | 4 | -- | -- | -- | -- | 4 |
| 3 | | 6 | -- | -- | -- | -- | 6 |
| 4 | 2 | 2 | 2 | -- | -- | -- | 4 |
| 5 | | 4 | 2 | -- | -- | -- | 6 |
| 6 | | ... | ... | -- | -- | -- | ... |
| ... | ... | ... | ... | ... | ... | ... | ... |

In another possible design solution, the value of the first parameter corresponding to each reference signal resource in the K first parameter combinations may be determined from the preconfigured candidate value set of the first parameter based on the target value corresponding to the target second parameter combination and the value of N. In this scenario, each of the K values corresponding to the K first parameter combinations may be less than or equal to the target value corresponding to the target second parameter combination.

For example, the first parameter is $L_n$, the second parameter is $p_v$, the third parameter is $\beta$, the target value represents a largest value of the sum of the values of the N first parameters included in each of the K first parameter combinations, the preconfigured candidate value set of $L_n$ is {2, 4, 6}, v=2, the target second parameter combination is {1/8, 1/2}, and the target value corresponding to the target second parameter combination is 8, N=3, and K=2. Therefore, the network device may select, based on the target value 8 and the value 3 of N, one value from {2, 4, 6} as the value of the first parameter corresponding to each of three reference signal resources, to form one first parameter combination. In addition, values of three first parameters included in each first parameter combination do not exceed the target value 8, that is,

$L_d \geq \sum_1^N L_n$ . Based on this, for each of the N reference signal resources, the network device performs selection K times from {2, 4, 6}, to form the K first parameter combinations. For example, if two selected first parameter combinations are {2, 2, 2} and {2, 4, 2} respectively, the first indication information may indicate an index set of values of three first parameters corresponding to each of the two first parameter combinations. For an indication manner of the first indication information, refer to the indication process of the first indication information when the value of the first parameter corresponding to each reference signal resource in the K first parameter combinations is determined from the preconfigured candidate value set of the first parameter in the foregoing scenario 1. Details are not described herein again.

It should be understood that when the first parameter is used to determine the quantity of selected ports, that is,

$\alpha_d \geq \sum_1^N \alpha_n$ , a process of determining the K first parameter combinations based on the preconfigured candidate value set of the first parameter is similar to the foregoing process. In addition, when the target value represents the largest value of the average value of the values of the N first parameters included in each of the K first parameter combinations, regardless of whether the first parameter is used to determine the quantity of spatial domain basis vectors or the quantity of selected ports, a process of determining the K first parameter combinations based on the preconfigured candidate value set of the first parameter is similar to the foregoing process, that is, for any one of the K first parameter combinations, $L_d \geq \frac{1}{N}\sum_1^N L_n$

or $\alpha_d \geq \frac{1}{N}\sum_1^N \alpha_n$ . Details are not described again.

For the foregoing step S503,
for example, when K>1, the terminal device may determine, based on the received first indication information and the received second indication information, the K first parameter combinations and the target second parameter combination that are configured by the network device, to determine, based on one first parameter combination selected from the K first parameter combinations and the target second parameter combination, channel state information corresponding to the N reference signal resources; or when K=1, the terminal device may directly determine, based on the indicated first parameter combination and the target second parameter combination, channel state information corresponding to the N reference signal resources.

In this embodiment of this application, the target second parameter combination may be determined from the multiple candidate second parameter combinations based on the second indication information and/or the largest value in the K values. In other words, the terminal device may determine the target second parameter combination based on the second indication information and/or the largest value in the K values.

In a possible design solution, the K first parameter combinations may be determined from the multiple candidate first parameter combinations based on the first indication information. Further, the K first parameter combinations may be determined from the multiple candidate first parameter combinations based on the first indication information and one or both of the following: the value of N or the target value corresponding to the target second parameter combination.

In another possible design solution, the value of the first parameter corresponding to each reference signal resource in the K first parameter combinations is determined from the preconfigured candidate value set of the first parameter based on the first indication information. Further, the value of the first parameter corresponding to each reference signal resource in the K first parameter combinations is determined from the preconfigured candidate value set of the first parameter based on the first indication information and the value of N.

In the scenario 1 shown in S501, the terminal device may determine the K first parameter combinations based on the first indication information, or determine the K first parameter combinations based on the first indication information and the value of N. This is not specifically limited in this embodiment of this application.

For example, a candidate first parameter combination list preconfigured in the network device and the terminal device is shown in Table 3 or Table 4. Therefore, the terminal device may search Table 3 or Table 4 based on the index value indicated by the first indication information and the value of N, to obtain the K first parameter combinations configured by the network device, and select one first parameter combination from the K first parameter combinations, to determine the channel state information corresponding to the N reference signal resources. For example, the index values indicated by the first indication information are 1 and 2, N=3, and the preconfigured parameter list is shown in Table 3. In this case, the terminal device may determine, from Table 3 based on the index values indicated by the first indication information and the value of N, that two first parameter combinations are {2, 2, 2} and {4, 2, 2} respectively, to select one of the two first parameter combinations to determine quantities of spatial domain basis vectors required in dual-polarization directions in spatial domain matrices corresponding to three reference signal resources, for example, {2, 2, 2}. In this case, the quantities of spatial domain basis vectors required in the dual-polarization directions in the spatial domain matrices corresponding to the three reference signal resources are all $2L_n=4$.

For another example, a candidate first parameter combination list preconfigured in the network device and the terminal device is shown in Table 5. Therefore, the terminal device may search Table 5 based on only the index value indicated by the first indication information, to obtain the K first parameter combinations configured by the network device. For example, if the index values indicated by the first indication information are 5 and 6, the terminal device may search Table 5 based on the index values 5 and 6, to obtain two first parameter combinations {2, 2} and {4, 2}. In this case, N=2. Therefore, one of the two first parameter combinations is selected to determine quantities of spatial domain basis vectors required in dual-polarization directions in spatial domain matrices corresponding to two reference signal resources, for example, {2, 2}. In this case, the quantity of spatial domain basis vectors required in the dual-polarization directions in the spatial domain matrix corresponding to each of the two reference signal resources is $2L_n=4$.

For another example, if the K first parameter combinations are determined based on the preconfigured candidate value set of the first parameter, the terminal device may determine, based on the index value indicated by the first indication information, the K first parameter combinations configured by the network device. For example, if the index sets indicated by the first indication information are {1, 1, 1} and {2, 1, 1}, the terminal device may determine two first parameter combinations {2, 2, 2} and {4, 2, 2} from the preconfigured candidate value set of the first parameter based on the indicated index set, to select one of the two first parameter combinations, to determine quantities of spatial domain basis vectors required in dual-polarization directions in spatial domain matrices corresponding to the two reference signal resources.

It should be noted that, when K>1, the terminal device may select one first parameter combination from the K first parameter combinations based on channel measurement results corresponding to the N reference signal resources. For example, the terminal device selects, from the K first parameter combinations, one first parameter combination that best match a reference signal strength corresponding to the N received reference signal resources, and a reference signal resource with a larger strength corresponds to a larger value of a first parameter.

Further, the terminal device may determine the target second parameter combination from the multiple candidate second parameter combinations based on the second indication information and/or the largest value in the K values. The largest value in the K values is the target value corresponding to the target second parameter combination. For the largest value in the K values, refer to the related descriptions in S501. Details are not described herein again.

For example, a candidate second parameter combination list preconfigured in the network device and the terminal device is shown in Table 6 or Table 7. Therefore, the terminal device may search Table 6 or Table 7 based on the second indication information and the largest value in the K values, to obtain the target second parameter combination configured by the network device. For example, the index value indicated by the second indication information is 1 and the target value is 8. The terminal device searches Table 6 based on the index value and the target value, to obtain the target second parameter combination being { 1/8, 1/2} when the quantity of transport layers is v=1 or 2, and the target second parameter combination being { 1/4, 1/2} when the quantity of transport layers is v=3 or 4. Therefore, the terminal device may determine, based on the target second parameter combination, a quantity of frequency domain basis vectors required in a frequency domain matrix corresponding to each of three reference signal resources, and a largest quantity of non-zero coefficients that can be reported and that correspond to the three reference signal resources.

For another example, the candidate second parameter combination list preconfigured in the network device and the terminal device is shown in Table 8 or Table 9. Therefore, the terminal device may search Table 8 or Table 9 based on only the index indicated by the second indication information, to obtain the target second parameter combination configured by the network device. For example, the index value indicated by the second indication information is 5. The terminal device searches Table 8 based on the index value, to obtain the target second parameter combination being { 1/8, 1/2} when the quantity of transport layers is v=1 or 2, and the target second parameter combination being { 1/4, 1/2} when the quantity of transport layers is v=3 or 4, and may determine that the target value corresponding to the target second parameter combination is 8, which is equal to the largest value in the K values corresponding to the K first parameter combinations. Therefore, the terminal device may determine, based on the target second parameter combination, a quantity of frequency domain basis vectors required in a frequency domain matrix corresponding to each of three reference signal resources, and a largest quantity of non-zero coefficients that can be reported and that correspond to the three reference signal resources.

In the scenario 2 shown in S501, the terminal device may determine the target second parameter combination from the multiple candidate second parameter combinations based on the second indication information.

For example, the candidate second parameter combination list preconfigured in the network device and the terminal device is shown in Table 10, Table 11, or Table 12. Therefore, the terminal device may search Table 10, Table 11, or Table 12 based on the index value indicated by the second indication information, to obtain the target second parameter combination and the target value corresponding to the target second parameter combination. For example, if the index value indicated by the second indication information is 5, the terminal device may search Table 10 based on the index value, to obtain the target second parameter combination being {1/8, 1/2} when the quantity of transport layers is v=1 or 2, and the target second parameter combination being {1/4, 1/2} when the quantity of transport layers is v=3 or 4, and the target value corresponding to the target second parameter combination is 8.

Further, the terminal device may determine the K first parameter combinations based on the first indication information, or determine the K first parameter combinations based on the first indication information, the value of N, and the target value corresponding to the target second parameter combination, or determine the K first parameter combinations based on the first indication information and the value of N. This is not specifically limited in this embodiment of this application.

For example, a candidate first parameter combination list preconfigured in the network device and the terminal device is shown in Table 13, Table 14, or Table 15. Therefore, the terminal device may determine, from the multiple candidate first parameter combinations based on the first indication information, the value of N, and the target value corresponding to the target second parameter combination, the K first parameter combinations configured by the network device. For example, if the index values indicated by the first indication information are 1 and 2, the target value corresponding to the target second parameter combination is 8, and N=3, the terminal device may search Table 13 based on the index value, the target value, and the value of N, to obtain two first parameter combinations {4, 2, 2} and {2, 4, 2}. Therefore, one of the two first parameter combinations is selected to determine quantities of spatial domain basis vectors required in spatial domain matrices corresponding to three reference signal resources, for example, {2, 4, 2}. In this case, the quantities of spatial domain basis vectors required in the dual-polarization directions in the spatial domain matrices corresponding to the three reference signal resources are 4, 8, and 4 respectively.

For another example, a candidate first parameter combination list preconfigured in the network device and the terminal device is shown in Table 16. Therefore, the terminal device may determine, based on only the first indication information, the K first parameter combinations configured by the network device. For example, if the index values indicated by the first indication information are 4 and 5, the terminal device may search Table 16 based on the index values, to obtain two first parameter combinations {2, 2} and {4, 2}. In this case, N=2. Therefore, one of the two first parameter combinations is selected to determine quantities of spatial domain basis vectors required in spatial domain matrices corresponding to two reference signal resources, for example, {2, 2}. In this case, the quantity of spatial domain basis vectors required in the dual-polarization directions in the spatial domain matrix corresponding to each of the two reference signal resources is $2L_n=4$.

For another example, when the value of the first parameter corresponding to each reference signal resource in the K first parameter combinations is determined based on the preconfigured candidate value set of the first parameter, the terminal device may determine the K first parameter combinations based on the first indication information. For example, if the index sets indicated by the first indication information are {1, 1, 1} and {2, 1, 1}, the terminal device may determine two first parameter combinations {2, 2, 2} and {4, 2, 2} from the preconfigured candidate value set of the first parameter based on the indicated index set, to select one of the two first parameter combinations, to determine quantities of spatial domain basis vectors required in spatial domain matrices corresponding to the two reference signal resources. In this case, the sum or the average value of the values of the N first parameters included in each of the indicated K first parameter combinations is less than or equal to the target value corresponding to the target second parameter combination.

Based on the foregoing process, the terminal device may determine, based on one first parameter combination selected from the K first parameter combinations and the target second parameter combination, the quantity of spatial domain basis vectors or the quantity of selected ports and the quantity of frequency domain basis vectors that correspond to each of the N first reference signal resources. Further, the terminal device may select a corresponding quantity of spatial domain basis vectors or ports to form a spatial domain matrix or a port selection matrix, select a corresponding quantity of frequency domain basis vectors to form a frequency domain matrix, and form a coefficient matrix based on the selected spatial domain basis vectors or ports and the frequency domain basis vectors, so that the spatial domain matrix or the port selection matrix, the frequency domain matrix, and the coefficient matrix that separately correspond to the N reference signal resources are combined to form the CJT codebook shown above, and a corresponding PMI reporting amount is determined, to feed back the channel state information corresponding to the N reference signal resources. For a process of determining the channel state information after the terminal device obtains the values of the first parameter, the second parameter, and the third parameter, refer to an existing implementation process. Details are not described in this embodiment of this application.

For the terminal device, the terminal device may select one or more reference signal resources from the N reference signal resources to perform CSI calculation. A TRP corresponding to the one or more reference signal resources selected from the N reference signal resources provides a CJT service for the terminal device, so that the terminal device determines, based on the values of the first parameter, the second parameter, and the third parameter that are configured by the network device, the PMI reporting amount corresponding to the CJT codebook, to feed back joint channel state information between the TRP that provides the CJT service for the terminal device and the terminal device.

It should be understood that $2L_n$ spatial domain basis vectors in the spatial domain matrix corresponding to the reference signal resource selected by the terminal device and Mv or M frequency domain basis vectors in the frequency domain matrix may be separately selected by the terminal device from a spatial domain basis set and a frequency domain basis set that is predefined in the protocol, negotiated by the terminal device and the network device, or configured by the network device for the terminal device.

In this embodiment of this application, the largest total quantity of non-zero coefficients that correspond to the N reference signal resources and that are allowed to be reported by the terminal device may be determined based on the target value corresponding to the target second parameter combination. Therefore, the maximum feedback overheads of the non-zero coefficients may be controlled by using the target value corresponding to the target second parameter combination, to avoid excessively high feedback overheads. In addition, the network device usually pre-allocates, based on one combination with highest overheads in multiple parameter combinations configured by the network device for the terminal device, an uplink resource used for CSI reporting. In a current solution, a waste of pre-allocated resources can be reduced as much as possible.

For example, when the $k^{th}$ value in the K values is the sum of the values of the N first parameters included in the $k^{th}$ first parameter combination in the K first parameter combinations, one first parameter combination selected by the terminal device from the K first parameter combinations is $\{L_{11}, ... , L_{N1}\}$, the target second parameter combination is $\{p_{v1}, \beta_1\}$, the target value corresponding to the target second parameter combination is $L_{d1}$, and the largest total quantity of non-zero coefficients that correspond to the N reference signal resources and that are allowed to be reported is

$$2K_0 = 2\left\lceil \beta_1 2L_{d1} \left\lceil p_{v1} \frac{N_3}{R} \right\rceil \right\rceil$$ . In this case, the value of $p_{v1}$ is a value used when the quantity of transport layers is v=1. Alternatively, one first parameter combination selected by the terminal device from the K first parameter combinations is $\{\alpha_{11}, ..., \alpha_{N1}\}$, the target second parameter combination is $\{M_1, \beta_1\}$, and the target value corresponding to the target second parameter combination is $\alpha_{d1}$. In this case, the largest total quantity of non-zero coefficients that correspond to the N reference signal resources and that are allowed to be reported is $2K_0 = 2\lceil \beta_1 \alpha_{d1} P_N M_1 \rceil$ , and a largest total quantity of non-zero coefficients that correspond to the N reference signal resources and that are allowed to be reported and that correspond to each transport layer does not exceed K0, where $P_N$ is a quantity of ports of each of the N reference signal resources.

For another example, when the $k^{th}$ value in the K values is the average value of the values of the N first parameters included in the $k^{th}$ first parameter combination in the K first parameter combinations, one first parameter combination selected by the terminal device from the K first parameter combinations is $\{L_{11}, ..., L_{N1}\}$, the target second parameter combination is $\{p_{v1}, \beta_1\}$, the target value corresponding to the target second parameter combination is $L_{d1}$, and the largest total quantity of non-zero coefficients that correspond to the N reference signal resources and that are allowed to be

reported is $2K_0 = 2\left\lceil \beta_1 2NL_{d1} \left\lceil p_{v1} \frac{N_3}{R} \right\rceil \right\rceil$ . In this case, a value of $p_{v1}$ is a value used when the quantity of transport layers is v=1. Alternatively, one first parameter combination selected by the terminal device from the K first parameter combinations is $\{\alpha_{11}, ..., \alpha_{N1}\}$, the target second parameter combination is $\{M_1, \beta_1\}$, the target value corresponding to the target second parameter combination is $\alpha_{d1}$, and the largest total quantity of non-zero coefficients that correspond to the N reference signal resources and that are allowed to be reported is $2K_0 = 2\lceil \beta_1 N\alpha_{d1} P_N M_1 \rceil$ , where $P_N$ is a quantity of ports of reference signals.

Based on the communication method shown in S501 to S503, the network device generates the first indication information and the second indication information based on the first parameter combination and the second parameter combination that are associated with the target value, and sends the first indication information and the second indication information to the terminal device, so that the terminal device can create a codebook based on the configured K first parameter combinations and the configured target second parameter combination. This not only can reduce a quantity of configured parameter combinations, but also reduce complexity of configuring parameters by the network device for the terminal device, thereby reducing indication overheads of the network device.

In a possible design solution, as shown in FIG. 5, the communication method provided in this embodiment of this application may further include the following step.

S504: The terminal device sends third indication information to the network device. Correspondingly, the network device receives the third indication information from the terminal device.

The third indication information indicates one first parameter combination selected by the terminal device from the K first parameter combinations.

For example, when K>1, the terminal device may notify the network device of the first parameter combination selected from the K first parameter combinations, and the third indication information may include an index of the first parameter combination selected by the terminal device. Therefore, the network device may determine, based on the third indication information, the quantities of spatial domain basis vectors or the quantities of selected ports corresponding to the N reference signal resources in the codebook determined by the terminal device, so that the network device subsequently performs precoding design on the TRP that provides the CJT service for the terminal device.

Based on this, when the multiple first parameter combinations are configured, the network device may further receive the third indication information from the terminal device, to determine the quantity of corresponding spatial domain basis vectors or the quantity of corresponding ports.

In addition, in a CJT scenario, to enable CJT and obtain better coherent transmission performance between multiple TRPs, refer to CSI measurement and reporting of a single-TRP-based assumption. A codebook subset restriction technology is used to restrict PMI obtaining of the terminal device, to avoid interference to a user in another cell other than a coordinated TRP. In CSI reporting based on the CJT codebook, how to configure codebook subset restriction information for the multiple TRPs to implement codebook subset restriction for the multiple TRPs is an urgent problem to be resolved.

For example, FIG. 6 is a schematic flowchart of another communication method according to an embodiment of this application, to resolve a configuration problem of codebook subset restriction information of a CJT codebook.

As shown in FIG. 6, the communication method includes the following steps.

S601: A network device generates first information and second information.

In this embodiment of this application, the first information indicates K pieces of codebook subset restriction information, and there is an association relationship between the K pieces of codebook subset restriction information and M reference signal resources in N reference signal resources configured by the network device, where $K \leq M$, $M \leq N$, and K, M, and N are positive integers. In addition, one reference signal resource is associated with at most one piece of codebook subset restriction information, and one piece of codebook subset restriction information may be associated with one or more reference signal resources.

In this embodiment of this application, the second information indicates the association relationship between the K pieces of codebook subset restriction information and the M reference signal resources in the N reference signal resources configured by the network device.

In a possible implementation, the second information may include first indication information and second indication information. The first indication information indicates specific M reference signal resources, in the N reference signal resources configured by the network device, that have the association relationship with the K pieces of codebook subset restriction information. For example, the first indication information may indicate the M reference signal resources in the N reference signal resources by using an N-bit bitmap or a combination number. The second indication information indicates the association relationship between the K pieces of codebook subset restriction information and the M reference signal resources, and the association relationship may be preconfigured. For example, when K=2 and M=3, the second indication information may indicate that a 1st piece of codebook subset restriction information is associated with the 1st and 2nd reference signal resources in the M reference signal resources, and the 2nd piece of codebook subset restriction information is associated with a 3rd reference signal resource in the M reference signal resources.

In a possible implementation, when K=M, the second information indicates the association relationship between the K pieces of codebook subset restriction information and the K reference signal resources in the N reference signal resources configured by the network device. For example, the second information may alternatively indicate the K reference signal resources in the N reference signal resources by using an N-bit bitmap or a combination number. A specific association relationship between the K pieces of codebook subset restriction information and the K reference signal resources may be predefined. For example, a $k^{th}$ piece of codebook subset restriction information in the K pieces of codebook subset restriction information is associated with a $k^{th}$ reference signal resource in the K reference signal resources. It may be understood that the K pieces of codebook subset restriction information are in one-to-one correspondence with the K reference signal resources, and $1 \leq k \leq K$.

S602: The network device sends the first information and the second information to a terminal device. Correspondingly, the terminal device receives the first information and the second information from the network device.

In a possible implementation, the first information and the second information may be sent together, or may be sent separately. This is not specifically limited in this embodiment of this application.

S603: The terminal device determines the K pieces of codebook subset restriction information based on the first information, and determines, based on the second information, the corresponding association relationship between the K pieces of codebook subset restriction information and the M reference signal resources in the N reference signal resources configured by the network device.

For example, after the terminal device receives the first information and the second information, the terminal device determines the K pieces of codebook subset restriction information based on the first information, and determines, based on the second information, the corresponding association relationship between the K pieces of codebook subset restriction information and the M reference signal resources in the N reference signal resources configured by the network device.

Correspondingly, the terminal device determines the codebook subset restriction information separately associated with the M reference signal resources in the N reference signal resources. Therefore, the terminal device may determine, based on the codebook subset restriction information that is separately associated with the M reference signal resources in the N reference signal resources and that is determined based on the first information and the second information, joint channel state information corresponding to the N reference signal resources. The codebook subset restriction information associated with each of the M reference signal resources is used to determine partial channel state information corresponding to the reference signal resource in the joint channel state information corresponding to the N reference signal resources.

Based on the communication method shown in FIG. 6, understandings of codebook subset restriction information configurations of the network device and the terminal device may be aligned, to implement codebook subset restrictions on all or a part of the N reference signal resources configured for CJT CSI measurement, and indicate the terminal device to determine joint channel state information corresponding to the N reference signal resources, to avoid interference to a user in another cell other than a coordinated TRP, and enable better coherent joint transmission of multiple TRPs.

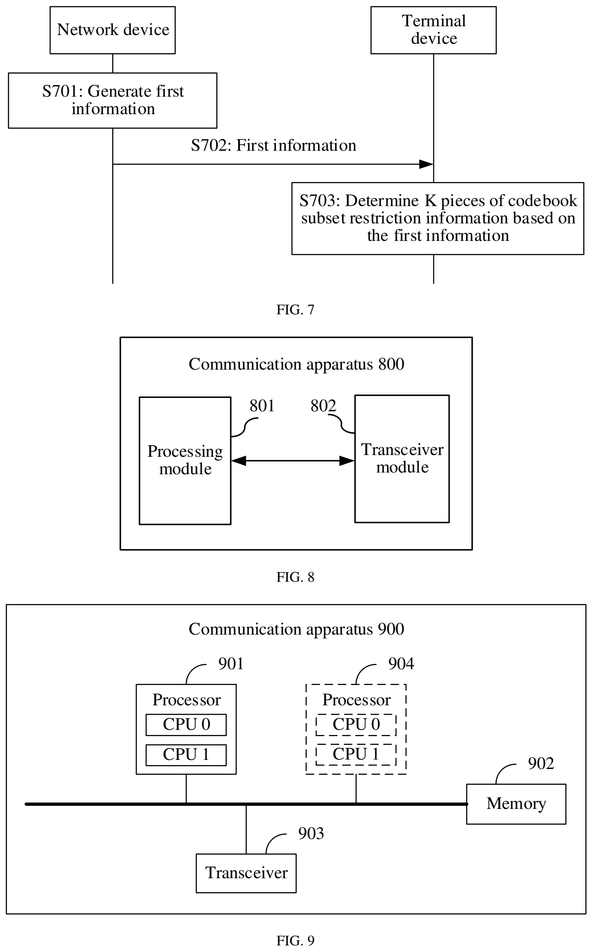

For example, FIG. 7 is a schematic flowchart of still another communication method according to an embodiment of this application. As shown in FIG. 7, the communication method includes the following steps.

S701: A network device generates first information.

In this embodiment of this application, the first information indicates K pieces of codebook subset restriction information, and there is an association relationship between the K pieces of codebook subset restriction information and M reference signal resources in N reference signal resources configured by the network device, where K≤M, M≤N, and K, M, and N are positive integers. In addition, one reference signal resource is associated with at most one piece of codebook subset restriction information, and one piece of codebook subset restriction information may be associated with one or more reference signal resources. There is an association relationship between the K pieces of codebook subset restriction information and first M or last M reference signal resources in the N reference signal resources configured by the network device. The association relationship between the K pieces of codebook subset restriction information and the M reference signal resources may be one of one or more association relationships preconfigured or predefined in a protocol.

In a possible implementation, the network device may further generate second information, and send the second information to a terminal device. Correspondingly, the terminal device receives the second information from the network device. The second information is used to determine a value of M, and the value of M is used to determine the association relationship between the K pieces of codebook subset restriction information and the M reference signal resources. For example, the one or more association relationships preconfigured or defined in the protocol include: when M=2K, a $k^{th}$ piece of codebook subset restriction information in the K pieces of codebook subset restriction information is associated with $(2*k-1)^{th}$ and $(2*k)^{th}$ reference signal resources in the M reference signal resources. $1≤k≤K$ and k is a positive integer.

In a possible implementation, when K=M, the K pieces of codebook subset restriction information are in one-to-one correspondence with the K pieces of reference signal resource information in the N reference signal resources, and a specific association relationship between the K pieces of codebook subset restriction information and the K reference signal resources may be predefined. For example, a $k^{th}$ piece of codebook subset restriction information in the K pieces of codebook subset restriction information is associated with a $k^{th}$ reference signal resource in the K reference signal resources, where $1≤k≤K$.

S702: The network device sends the first information to the terminal device. Correspondingly, the terminal device receives the first information from the network device.

S703: The terminal device determines the K pieces of codebook subset restriction information based on the first information.

For example, after receiving the first information sent by the network device, the terminal device may determine the K pieces of codebook subset restriction information based on the first information. There is an association relationship between the K pieces of codebook subset restriction information and first K or last K reference signal resources in the N reference signal resources configured by the network device. Therefore, the terminal device may determine, based on the predefined specific association relationship between the K pieces of codebook subset restriction information and the K reference signal resources, codebook subset restriction information separately associated with the first K or the last K reference signal resources in the N reference signal resources. Further, the terminal device determines, based on the codebook subset restriction information that is separately associated with the K reference signal resources in the N reference signal resources and that is determined based on the first information, joint channel state information corresponding to the N reference signal resources. The codebook subset restriction information associated with each of the K reference signal resources is used to determine partial channel state information corresponding to the reference signal resource in the joint channel state information corresponding to the N reference signal resources.

For another example, the terminal device receives the first information and the second information that are sent by the network device, determines the K pieces of codebook subset restriction information based on the first information, and determines the value of M based on the second information. There is the association relationship between the K pieces of codebook subset restriction information and the first M or the last M reference signal resources in the N reference signal resources configured by the network device. Further, the terminal device determines, based on the value of M, the corresponding association relationship between the K codebook subsets and the M reference signal resources in the N reference signal resources configured by the network device. Correspondingly, the terminal device determines the codebook subset restriction information separately associated with the M reference signal resources in the N reference signal resources. The terminal device determines, based on the codebook subset restriction information that is separately associated with the M reference signal resources in the N reference signal resources and that is determined based on the first information and the second information, joint channel state information corresponding to the N reference signal resources. The codebook subset restriction information associated with each of the M reference signal resources is used to determine partial channel state information corresponding to the reference signal resource in the joint channel state information corresponding to the N reference signal resources.

Based on the communication method shown in FIG. 7, understandings of codebook subset restriction information configurations of the network device and the terminal device may be aligned, to implement codebook subset restrictions on all or a part of the N reference signal resources configured for CJT CSI measurement, and indicate the terminal device to determine joint channel state information corresponding to the N reference signal resources, to avoid interference to a user in another cell other than a coordinated TRP, and enable better coherent joint transmission of multiple TRPs.

It may be understood that, in the foregoing embodiments, the methods and/or the steps implemented by the network device may alternatively be implemented by a component (for example, a processor, a chip, a chip system, a circuit, a logical module, or software) that can be used in the network device, and the methods and/or the steps implemented by the terminal device may alternatively be implemented by a component (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiments, an apparatus including the network device, or a component that can be used in the network device, for example, a chip or a chip system. Alternatively, the communication apparatus may be the terminal device in the foregoing method embodiments, an apparatus including the terminal device, or a component that can be used in the terminal device, for example, a chip or a chip system.

It may be understood that, to implement the foregoing functions, the communication apparatus includes a hardware structure and/or a software module for performing a corresponding function. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

For example, the communication apparatus is the terminal device or the network device in the foregoing method embodiments. FIG. 8 is a diagram of a structure of a communication apparatus according to an embodiment of this application. As shown in FIG. 8, the communication apparatus 800 includes a processing module 801 and a transceiver module 802. The processing module 801 is configured to perform a processing function of the network device or the terminal device in the foregoing method embodiments. The transceiver module 802 is configured to perform sending and receiving functions of the network device or the terminal device in the foregoing method embodiments.

In a possible design solution, in this embodiment of this application, the transceiver module 802 may include a receiving module and a sending module (not shown in FIG. 8). The transceiver module is configured to implement a sending function and a receiving function of the communication apparatus 800.

In a possible design solution, the communication apparatus 800 may further include a storage module (not shown in FIG. 8), and the storage module stores a program or instructions. When the processing module 801 executes the program or the instructions, the communication apparatus 800 may perform functions of the network device or the terminal device in the method shown in any one of FIG. 5 to FIG. 7.

It should be understood that the processing module 801 in the communication apparatus 800 may be implemented by a processor or a processor-related circuit component, or may be a processor or a processing unit. The transceiver module 802 may be implemented by a transceiver or a transceiver-related circuit component, or may be a transceiver or a transceiver unit.

All related content of the steps in the foregoing method embodiments may be cited in function descriptions of the corresponding functional modules. Details are not described herein again.

The communication apparatus 800 provided in this embodiment may perform the foregoing communication method. Therefore, for technical effects that can be achieved by the communication apparatus 800, refer to the foregoing method embodiments. Details are not described herein again.

For example, FIG. 9 is a diagram of a structure of another communication apparatus according to an embodiment of this application. The communication apparatus may be a network device or a terminal device, or may be a chip (system) or another component or part that can be disposed in the network device or the terminal device. As shown in FIG. 9, a communication apparatus 900 may include a processor 901. In a possible design solution, the communication apparatus 900 may further include a memory 902 and/or a transceiver 903. The processor 901 is coupled to the memory 902 and the transceiver 903. For example, the processor 901 may be connected to the memory 902 and the transceiver 903 through a communication bus.

The following describes each component of the communication apparatus 900 in detail with reference to FIG. 9.

The processor 901 is a control center of the communication apparatus 900, and may be one processor or may be a collective term of multiple processing elements. For example, the processor 901 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

In a possible design solution, the processor 901 may perform various functions of the communication apparatus 900 by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include multiple processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store the software program for executing the solutions in this application, and the processor 901 controls execution. For a specific implementation, refer to the foregoing method embodiments. Details are not described herein again.

In a possible design solution, the memory 902 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal device, and the transceiver 903 may be configured to communicate with a network device or communicate with another terminal device. For another example, the communication apparatus 900 is a network device, and the transceiver 903 may be configured to communicate with a terminal device or communicate with another network device.

In a possible design solution, the transceiver 903 may include a receiver and a transmitter (not separately shown in FIG. 9). The receiver is configured to implement a receiving function, and the transmitter is configured to implement a sending function.

In a possible design solution, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It should be noted that a structure of the communication apparatus 900 shown in FIG. 9 does not constitute a limitation on the communication apparatus. An actual communication apparatus may include more or fewer components than those shown in the figure, or combine some components, or have different component arrangement.

In addition, for technical effects of the communication apparatus 900, refer to the technical effects of the communication method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. Clearly, a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

   generating first information, wherein the first information indicates K pieces of codebook subset restriction information, there is an association relationship between the K pieces of codebook subset restriction information and M reference signal resources in N reference signal resources configured by a network device, one of the M reference signal resources is associated with one of the K pieces of codebook subset restriction information, the one piece of codebook subset restriction information is associated with at least one reference signal resource, K≤M, M≤N, and K, M, and N are positive integers; and

sending the first information to a terminal device.

2. The method according to claim 1, wherein the method further comprises:

sending second information to the terminal device, wherein the second information indicates the association relationship between the K pieces of codebook subset restriction information and the M reference signal resources.

3. A communication method, wherein the method comprises:

receiving first information from a network device, wherein the first information indicates K pieces of codebook subset restriction information, there is an association relationship between the K pieces of codebook subset restriction information and M reference signal resources in N reference signal resources configured by the network device, one of the M reference signal resources is associated with one of the K pieces of codebook subset restriction information, the one piece of codebook subset restriction information is associated with at least one reference signal resource, K≤M, M≤N, and K, M, and N are positive integers; and

determining the K pieces of codebook subset restriction information based on the first information.

4. The method according to claim 3, wherein the method further comprises:

receiving second information from the network device, wherein the second information indicates the association relationship between the K pieces of codebook subset restriction information and the M reference signal resources. ,

5. The method according to claim 2 or 4, wherein the second information is carried for sending in any one of the following: medium access control MAC signaling, a radio resource control RRC message, or downlink control information DCI.

6. The method according to claim 2, 4, or 5, wherein when K≠M, the second information comprises first indication information and second indication information, wherein the first indication information indicates the M reference signal resources, and the second indication information indicates the association relationship between the K pieces of codebook subset restriction information and the M reference signal resources.

7. The method according to claim 2, 4, or 5, wherein when K=M, the second information comprises first indication information, wherein the first indication information indicates the K reference signal resources, and the K pieces of codebook subset limitation information is associated with the K reference signal resources in a one-to-one manner.

8. The method according to claim 2, 4, or 5, wherein the second information indicates a value of M.

9. The method according to claim 8, wherein when K=M, the K pieces of codebook subset restriction information are in one-to-one correspondence with the M reference signal resources.

10. The method according to any one of claims 1 to 9, wherein the first information is carried for sending in any one of the following: MAC signaling, an RRC message, or DCI.

11. A communication method, wherein the method comprises:

generating first indication information and second indication information, wherein the first indication information indicates K first parameter combinations, each of the K first parameter combinations comprises a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter comprised in a $k^{th}$ first parameter combination in the K first parameter combinations, the target second parameter combination comprises a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, wherein n, k, N, and K are positive integers, $1 \leq n \leq N$, and $1 \leq k \leq K$; and
sending the first indication information and the second indication information to a terminal device.

12. The method according to claim 11, wherein the target second parameter combination is determined from the multiple candidate second parameter combinations based on the largest value in the K values, and the target value corresponding to the target second parameter combination is greater than or equal to the largest value in the K values.

13. The method according to claim 12, wherein the K first parameter combinations are determined from multiple candidate first parameter combinations based on a value of N, or the value of the first parameter corresponding to each reference signal resource in the K first parameter combinations is determined from a preconfigured candidate value set of the first parameter based on a value of N.

14. The method according to claim 11, wherein the K first parameter combinations are determined from multiple candidate first parameter combinations based on the target value corresponding to the target second parameter combination and a value of N, or the value of the first parameter corresponding to each reference signal resource in the K first parameter combinations is determined from a preconfigured candidate value set of the first parameter based on the target value corresponding to the target second parameter combination and a value of N.

15. The method according to claim 14, wherein when the K first parameter combinations are determined from the multiple candidate first parameter combinations based on the target value corresponding to the target second parameter combination and the value of N, each of the K values is equal to the target value corresponding to the target second parameter combination.

16. The method according to any one of claims 11 to 15, wherein K is a positive integer greater than 1, and the method further comprises:
receiving third indication information from the terminal device, wherein the third indication information indicates one first parameter combination selected by the terminal device from the K first parameter combinations.

17. A communication method, wherein the method comprises:

receiving first indication information and second indication information from a network device, wherein the first indication information indicates K first parameter combinations, each of the K first parameter combinations comprises a value of a first parameter corresponding to each of N reference signal resources, and a value of a first parameter corresponding to an $n^{th}$ reference signal resource in the N reference signal resources is used to determine a quantity of spatial domain basis vectors corresponding to the $n^{th}$ reference signal resource, or a value of a first parameter corresponding to an $n^{th}$ reference signal resource in the N reference signal resources is used to determine a quantity of selected ports corresponding to the $n^{th}$ reference signal resource; and the second indication information indicates a target second parameter combination determined from multiple candidate second parameter combinations, each of the multiple candidate second parameter combinations corresponds to one target value, a target value corresponding to the target second parameter combination is greater than or equal to a largest value in K values determined based on the K first parameter combinations, a $k^{th}$ value in the K values is determined based on a value of the first parameter comprised in a $k^{th}$ first parameter combination in the K first parameter combinations, the target second parameter combination comprises a value of a second parameter and a value of a third parameter, the value of the second parameter is used to determine a quantity of frequency domain basis vectors corresponding to each of the N reference signal resources, and the value of the third parameter is used to determine a largest total quantity of non-zero coefficients that correspond to the N reference signal resources and that are allowed to be reported, wherein n, k, N, and K are positive integers, $1 \leq n \leq N$, and $1 \leq k \leq K$; and
determining, based on one first parameter combination selected from the K first parameter combinations and the target second parameter combination, channel state information corresponding to the N reference signal resources.

18. The method according to claim 17, wherein the target second parameter combination is determined from the multiple candidate second parameter combinations based on the second indication information.

19. The method according to claim 18, wherein that the target second parameter combination is determined from the multiple candidate second parameter combinations based on the second indication information comprises: the target second parameter combination is determined from the multiple candidate second parameter combinations based on the second indication information and the largest value in the K values, and the target value corresponding to the target second parameter combination is greater than or equal to the largest value in the K values.

20. The method according to claim 18 or 19, wherein the K first parameter combinations are determined from multiple candidate first parameter combinations based on the first indication information, or the value of the first parameter corresponding to each reference signal resource in the K first parameter combinations is determined from a preconfigured candidate value set of the first parameter based on the first indication information.

21. The method according to claim 20, wherein that the K first parameter combinations are determined from the multiple candidate first parameter combinations based on the first indication information comprises: the K first parameter combinations are determined from the multiple candidate first parameter combinations based on the first indication information and one or both of the following: a value of N or the target value corresponding to the target second parameter combination.

22. The method according to claim 21, wherein when the K first parameter combinations are determined from the multiple candidate first parameter combinations based on the first indication information, the value of N, and the target value corresponding to the target second parameter combination, each of the K values is equal to the target value corresponding to the target second parameter combination.

23. The method according to any one of claims 17 to 22, wherein K is a positive integer greater than 1, and the method further comprises: sending third indication information to the network device, wherein the third indication information indicates the first parameter combination selected from the K first parameter combinations.

24. The method according to any one of claims 11 to 23, wherein the $k^{th}$ value in the K values is a sum of values of N first parameters comprised in the $k^{th}$ first parameter combination in the K first parameter combinations, or the $k^{th}$ value in the K values is an average value of values of N first parameters comprised in the $k^{th}$ first parameter combination in the K first parameter combinations.

25. The method according to any one of claims 11 to 22, wherein the largest total quantity of non-zero coefficients that correspond to the N reference signal resources and that are allowed to be reported is determined based on the target value corresponding to the target second parameter combination.

26. The method according to any one of claims 11 to 23, wherein products of values of second parameters and values of third parameters comprised in all of multiple candidate second parameter combinations corresponding to a same target value are different.

27. The method according to any one of claims 11 to 24, wherein when the value of the first parameter corresponding to the $n^{th}$ reference signal resource in the N reference signal resources is used to determine the quantity of spatial domain basis vectors corresponding to the $n^{th}$ reference signal resource, each of the multiple candidate second parameter combinations is a parameter combination formed by one parameter value in a candidate value set of the second parameter and one parameter value in a candidate value set of the third parameter other than a target parameter value combination in multiple parameter combinations, and the target parameter combination comprises a parameter combination formed by a smallest parameter value in the candidate value set of the second parameter and a smallest parameter value in the candidate value set of the third parameter, and/or a parameter combination formed by a largest parameter value in the candidate value set of the second parameter and a largest parameter value in the candidate value set of the third parameter.

28. The method according to any one of claims 11 to 27, wherein a sum of values of N first parameters in each of the K first parameter combinations is less than or equal to a first threshold, and the first threshold is determined based on the value of N.

29. The method according to any one of claims 11 to 28, wherein a value of at most one first parameter in the values of the N first parameters in each of the K first parameter combinations is a largest value in the preconfigured candidate value set of the first parameter.

30. The method according to any one of claims 11 to 29, wherein when the target value corresponding to the candidate second parameter combination is greater than or equal to a second threshold, a product of the value of the second parameter and the value of the third parameter comprised in the candidate second parameter combination is less than or equal to a third threshold, and a product of the target value corresponding to the candidate second parameter combination and the value of the second parameter and the value of the third parameter comprised in the candidate second parameter combination is less than or equal to a product of the second threshold and the third threshold.

31. A communication apparatus, wherein the apparatus comprises a processing module and a transceiver module, wherein

the processing module is configured to perform a processing function in the method according to any one of claims 1 to 10 or 11 to 30; and
the transceiver module is configured to perform sending and receiving functions in the method according to any one of claims 1 to 10 or 11 to 30.

32. A communication apparatus, comprising a processor, wherein the processor is coupled to a memory; and the processor is configured to execute a computer program stored in the memory, so that the communication apparatus performs the method according to any one of claims 1 to 10 or claims 11 to 30.

33. A computer-readable storage medium, wherein the computer-readable storage medium stores a computer program or instructions, and when the computer program or the instructions are run on a computer, the computer is enabled to perform the method according to any one of claims 1 to 10 or 11 to 30.

34. A computer program product, wherein the computer program product comprises a computer program or instructions, and when the computer program or the instructions are run on a computer, the computer is enabled to perform the method according to any one of claims 1 to 10 or 11 to 30.

Network device 101     Network device 102     Network device 103

Terminal device 104

FIG. 1

FIG. 2

Network device 301          Terminal device 302

FIG. 3

FIG. 4

Network device

Terminal device

S501: Generate first indication information and second indication information

S502: First indication information and second indication information

S503: Determine, based on one first parameter combination selected from K first parameter combinations and a target second parameter combination, channel state information corresponding to N reference signal resources

S504: Third indication information

FIG. 5

Network device

Terminal device

S601: Generate first information and second information

S602: First information and second information

S603: Determine K pieces of codebook subset restriction information based on the first information, and determine, based on the second information, a corresponding association relationship between the K pieces of codebook subset restriction information and M reference signal resources in N reference signal resources configured by the network device

FIG. 6

Network device

Terminal device

S701: Generate first information

S702: First information

S703: Determine K pieces of codebook subset restriction information based on the first information

FIG. 7

Communication apparatus 800

801    802

Processing module ←→ Transceiver module

FIG. 8

Communication apparatus 900

901    904

Processor
CPU 0
CPU 1

Processor
CPU 0
CPU 1

902

Memory

903

Transceiver

FIG. 9

## INTERNATIONAL SEARCH REPORT

| | International application No. |
|---|---|
| | **PCT/CN2024/076078** |

**A.    CLASSIFICATION OF SUBJECT MATTER**

H04W 72/23(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; CNKI; ENTXTC; DWPI; IEEE; 3GPP: 码本子集限制信息, 码本子集配置信息, 参考信号资源, 关联, 参数, 基向量, 空域, 频域, 系数, 相干传输, CJT, Codebook, configuration, association, reference signal resource, parameter, basis vector, space-domain, frequency-domain, coefficient

**C.    DOCUMENTS CONSIDERED TO BE RELEVANT**

| Category* | Citation of document, with indication, where appropriate, of the relevant passages | Relevant to claim No. |
|---|---|---|
| X | CN 115189736 A (HUAWEI TECHNOLOGIES CO., LTD.) 14 October 2022 (2022-10-14) description, paragraphs [0246]-[0270] | 1-10, 31-34 |
| A | WO 2023010245 A1 (GUANGDONG OPPO MOBILE TELECOMMUNICATIONS CORP., LTD.) 09 February 2023 (2023-02-09) description, page 6 line 29-page 11 line 11 | 1-34 |
| A | CN 111435849 A (HUAWEI TECHNOLOGIES CO., LTD.) 21 July 2020 (2020-07-21) entire document | 1-34 |
| A | US 2020186207 A1 (INTEL CORP.) 11 June 2020 (2020-06-11) entire document | 1-34 |
| A | HUAWEI et al. "Phase Randomization and Correction for CSI quantization in frequency domain" *3GPP TSG RAN WG1 Meeting #96bis, R1-1903980,* 12 April 2019 (2019-04-12), entire document | 1-34 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2024** | **15 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076078**

| Patent document cited in search report | | | Publication date (day/month/year) | Patent family member(s) | | | Publication date (day/month/year) |
|---|---|---|---|---|---|---|---|
| CN | 115189736 | A | 14 October 2022 | WO | 2022207001 | A1 | 06 October 2022 |
| | | | | EP | 4300842 | A1 | 03 January 2024 |
| | | | | US | 2024022303 | A1 | 18 January 2024 |
| WO | 2023010245 | A1 | 09 February 2023 | CN | 117529886 | A | 06 February 2024 |
| CN | 111435849 | A | 21 July 2020 | KR | 20210126013 | A | 19 October 2021 |
| | | | | US | 2021336677 | A1 | 28 October 2021 |
| | | | | WO | 2020143815 | A1 | 16 July 2020 |
| | | | | CN | 112737648 | A1 | 30 April 2021 |
| | | | | EP | 3910807 | A1 | 17 November 2021 |
| US | 2020186207 | A1 | 11 June 2020 | EP | 3635876 | A1 | 15 April 2020 |
| | | | | WO | 2018226581 | A1 | 13 December 2018 |
| | | | | CN | 110999106 | A | 10 April 2020 |
| | | | | CN | 115694577 | A | 03 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310138206X